(19) <span>Europäisches Patentamt</span><br/><span>European Patent Office</span><br/><span>Office européen des brevets</span>

(11) **EP 4 654 088 A1**

(12) ## EUROPEAN PATENT APPLICATION
published in accordance with Art. 153(4) EPC

(43) Date of publication:
**26.11.2025 Bulletin 2025/48**

(21) Application number: **24749695.3**

(22) Date of filing: **31.01.2024**

(51) International Patent Classification (IPC):
**G06N 3/098** (2023.01)  **G06N 20/00** (2019.01)

(86) International application number:
**PCT/CN2024/074834**

(87) International publication number:
**WO 2024/160216 (08.08.2024 Gazette 2024/32)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **31.01.2023 CN 202310129559**

(71) Applicant: **Huawei Technologies Co., Ltd.**
**Shenzhen, Guangdong 518129 (CN)**

(72) Inventors:
• **LI, Yinchuan**
  **Shenzhen, Guangdong 518129 (CN)**
• **SHAO, Yunfeng**
  **Shenzhen, Guangdong 518129 (CN)**

(74) Representative: **Isarpatent**
**Patent- und Rechtsanwälte**
**Barth Hassa Peckmann & Partner mbB**
**Friedrichstraße 31**
**80801 München (DE)**

(54) **FEDERATED LEARNING METHOD AND RELATED APPARATUS**

(57) A federated learning method is provided, applied to the field of artificial intelligence technologies. In the method, federated learning is implemented by exchanging prior distribution and posterior distribution of a model parameter between nodes, so that data distribution of training data in the nodes can be learned in a model training process. In addition, when obtaining a plurality of models corresponding to different data distribution, the node selects, from the plurality of models based on performance of each model in processing training data, a model closest to a training data distribution for training. This resolves a problem that training data distribution on different nodes is different, and can effectively improve effect of a model obtained through training.

601
A first node obtains prior distributions of parameters of a plurality of models

602
The first node determines, based on the prior distribution of the parameters of the plurality of models and local training data of the first node, performance of each of the plurality of models in processing the local training data

603
The first node performs training based on prior distribution of a parameter of a first model and the local training data, to obtain posterior distribution of the parameter of the first model, where the first model is one of the plurality of models, and the first model is determined in the plurality of models based on the performance of each model in processing the local training data

604
The first node sends the posterior distribution of the parameter of the first model to a second node

FIG. 6

## Description

This application claims priority to Chinese Patent Application No. 202310129559.3, filed with the China National Intellectual Property Administration on January 31, 2023 and entitled "FEDERATED LEARNING METHOD AND RELATED APPARATUS", which is incorporated herein by reference in its entirety.

## TECHNICAL FIELD

This application relates to the field of artificial intelligence (artificial intelligence, AI) technologies, and in particular, to a federated learning method and a related apparatus.

## BACKGROUND

As users have increasingly will to protect personal privacy data, user data of data owners cannot be shared, and large and small "data silos" are formed. The "data silo" poses a new challenge to massive data-based artificial intelligence (artificial intelligence, AI), that is, how to train a machine learning model without permission to obtain enough training data.
Federated learning emerges to cope with the challenge brought by the "data silo". Federated learning can effectively help clients perform joint training without sharing data resources (that is, training data is retained locally), to build a shared machine learning model. In a local training phase, each client trains a local model based on training data. In a model aggregation phase, each client uploads the local model to a cloud server, and the cloud server aggregates local models to obtain a global model and delivers the global model. The client updates the global model based on the training data, to obtain a new local model. This process is repeated until the global model converges.
In federated learning, clients participating in federated learning usually belong to different users or organizations. Therefore, distribution of training data on different clients usually varies greatly, that is, the data is non-independent and identically distributed (non-independent and identically distributed, Non-IID). This easily causes poor effect of a model obtained through training, and the model may even fail to converge.

## SUMMARY

This application provides a federated learning method, to effectively improve effect of a model obtained through training.
A first aspect of this application provides a federated learning method, applied to the field of artificial intelligence technologies. The federated learning method includes: First, a first node obtains prior distribution of parameters of a plurality of models, where the plurality of models may all be machine learning models whose parameters obey the distribution. The prior distribution of the parameters of the plurality of models may be, for example, Gaussian distribution, delta (delta) distribution, or other distribution. The first node may be, for example, a client node, and is configured to train an obtained model based on training data.
Then, the first node determines, based on the prior distribution of the parameters of the plurality of models and training data of the first node, performance of each of the plurality of models in processing the training data. For example, the first node obtains a parameter value of each of the plurality of models through sampling based on the prior distribution of the parameters of the plurality of models, that is, obtains a specific value of each parameter of each model. Then, the first node determines, based on the parameter value of each model and the training data, the performance of each model in processing the training data. The training data of the first node may be training data locally stored in the first node, or the training data of the first node may be training data stored in a cloud server or a database connected to the first node.
Then, the first node performs training based on prior distribution of a parameter of a first model and the training data, to obtain posterior distribution of the parameter of the first model, where the first model is one of the plurality of models, and the first model is determined in the plurality of models based on the performance of each model in processing the training data. For example, the first node may select, from the plurality of models based on performance corresponding to each model, the first model with optimal performance for processing the training data. If the first model has optimal performance when processing the training data, it indicates that the prior distribution of the parameter of the first model is most fit for distribution of the training data in the first node. Therefore, the first node selects the first model for further training.
Finally, the first node sends the posterior distribution of the parameter of the first model to a second node, so that the second node updates the prior distribution of the parameter of the first model based on the posterior distribution that is of the parameter of the first model and that is uploaded by each node. The second node may be, for example, an aggregation node, and is configured to update the prior distribution of the parameter of the model based on posterior distribution of a parameter of the model uploaded by each client node.
In this solution, federated learning is implemented by exchanging prior distribution and posterior distribution of a model parameter between nodes, so that data distribution of training data in the nodes can be learned in a model training process. In addition, when obtaining a plurality of models corresponding to different data distribution, the node selects, from the plurality of models based on performance of each model in processing training data, a model closest to a training data distribution for training. This resolves a problem that training data distribution on different nodes is different, and can effectively improve effect of a model obtained through training.

In addition, the machine learning model whose parameter obeys distribution can give probabilities of various values of a parameter in advance, and probabilities of the various values of the parameter can represent advantages and disadvantages of various possible improvement directions of the machine learning model. Therefore, performing federated learning on the machine learning model whose parameter obeys a distribution helps a node participating in federated learning to find a better improvement direction of the machine learning model, thereby reducing training time and overheads of communication between the nodes.

In a possible implementation, a federated learning architecture includes an aggregation node and a plurality of client nodes. The second node is the aggregation node, and the first node is one of the plurality of client nodes. That the first node obtains the prior distribution of the parameters of the plurality of models specifically includes: The first node receives the prior distribution of the parameters of the plurality of models from the second node.

In addition, when the first node sends the posterior distribution of the parameter of the first model to the second node, the first node further sends indication information to the second node, where the indication information indicates that the posterior distribution that is of the parameter and that is sent by the first node corresponds to the first model.

In other words, after the first node selects the first model from the plurality of models for training, when uploading the posterior distribution of the parameter of the first model, the first node further needs to notify the second node that the model selected by the first node is the first model.

In this solution, actually, the aggregation node establishes, in advance based on a possible data distribution status on each client node, a plurality of models respectively corresponding to different data distribution types, and delivers the plurality of models to each client node. The client node selects, based on the training data, a model that is closest to local data distribution. In addition, after each client node uploads posterior distribution of a parameter of a corresponding model, the aggregation node separately aggregates a corresponding model, to separately aggregate the model based on the data distribution type. In this way, finally obtained prior distribution of the parameter of the model can better indicate a distribution status of the training data in the client node, thereby resolving a problem that training data is distributed differently on different nodes, and effectively improving effect of the model obtained through training.

In a possible implementation, the federated learning architecture includes a plurality of aggregation nodes and a plurality of client nodes, each aggregation node is responsible for one model, and the first node is one of the plurality of client nodes.

That the first node obtains the prior distribution of the parameters of the plurality of models includes: The first node separately receives prior distribution of parameters of different models from the plurality of nodes, to obtain the prior distribution of the parameters of the plurality of models. The prior distribution of the parameter of the first model is received by the first node from the second node. Therefore, after the first node obtains the posterior distribution of the parameter of the first model through training, the first node sends the posterior distribution of the parameter of the first model to the second node.

In general, in this solution, actually, the plurality of aggregation nodes establish, in advance based on the data distribution status on each client node, the models respectively corresponding to the different data distribution types. The plurality of aggregation nodes respectively deliver the models to the client nodes. The client node selects, based on the training data, the model that is closest to the local data distribution. In addition, after each client node uploads the posterior distribution of the parameter of the corresponding model to the corresponding aggregation node, the aggregation node separately aggregates a corresponding model, to separately aggregate the model based on the data distribution type. In this way, finally obtained prior distribution of the parameter of the model can better indicate a distribution status of the training data in the client node, thereby resolving a problem that training data is distributed differently on different nodes, and effectively improving effect of the model obtained through training.

In addition, when obtaining the posterior distribution of the parameter of the model through training, the client node only needs to send the posterior distribution of the parameter of the model to the aggregation node corresponding to the model. This avoids that all client nodes send the posterior distribution of the parameter of the model to a same aggregation node, avoids network congestion, reduces processing load of the aggregation node, reduces a risk caused by a fault of a single aggregation node, and improves information security.

In a possible implementation, the performance of each model in processing the training data includes one or more of the following: model accuracy (that is, model precision), a model confidence level, a model convergence speed, and a gradient forward direction of the model during training.

In a possible implementation, that the first node performs training based on the prior distribution of the parameter of the first model and the training data to obtain the posterior distribution of the parameter of the first model specifically includes: The first node performs training based on the prior distribution of the parameter of the first model, the training data, and a selection probability of each parameter of the first model, to obtain posterior distribution of a target parameter of the first model, where the selection probability of each parameter indicates a probability of selecting each parameter as the target parameter of the first model, and the target parameter is a part of all parameters of the first model. In other words, the target parameters are a part of parameters selected from all parameters of the first model based on the selection probability of each parameter, and are parameters that need to be reserved in a training process of the first model. A parameter other than the target parameter is a parameter that needs to be removed from the first model in the training process.

After obtaining the posterior distribution of the target parameter of the first model through training, the first node sends the posterior distribution of the target parameter of the first model to the second node, to reduce a communication amount between the first node and the second node.

In this solution, in a process in which the client node trains the model, a sparsification parameter is introduced to filter original parameters of the model, to remove a part of parameters of the model, so that a quantity of parameters of the model can be effectively reduced, a calculation amount in the training process is reduced, and a communication amount between nodes can be reduced. This effectively improves federated learning efficiency.

In a possible implementation, the selection probability of each parameter of the first model is a probability value that is dynamically changeable in the training process. In other words, in a training process, the selection probability of each parameter of the first model may change with training, but is not a fixed value.

In this way, in the training process, the first node learns the selection probability of each parameter while learning posterior distribution of the parameter, so that the selection probability of each parameter can be automatically adjusted based on the training data, to better learn an optimal parameter sparsification result, and ensure performance of the model obtained through training.

In a possible implementation, the prior distribution of the parameter of the first model is probability distribution of the parameter of the first model or probability distribution of the probability distribution of the parameter of the first model.

A second aspect of this application provides federated learning method, applied to an aggregation node in federated learning. The method includes: A second node sends prior distribution of a parameter of a first model to a plurality of first nodes, where the first model is a machine learning model whose parameter obeys the distribution. The second node is an aggregation node, and the plurality of first nodes are all client nodes.

Then, the second node receives posterior distribution that is of the parameter of the first model and that is sent by a part of the plurality of first nodes. The plurality of first nodes further obtain prior distribution of a parameter of another model other than the first model, and the first nodes select, based on training data, one of the obtained plurality of models for training, to obtain posterior distribution of a parameter of the selected model.

The second node updates the prior distribution of the parameter of the first model based on the posterior distribution of the parameter of the first model, to obtain updated prior distribution of the parameter of the first model. In other words, after obtaining the posterior distribution that is of the parameters of the first model and that is sent by the part of first nodes, the second node updates the prior distribution of the parameters of the first model based on the posterior distribution that is of the parameters of the first model and that is sent by the part of first nodes.

Then, the second node sends the updated prior distribution of the parameter of the first model to the part of first nodes, so that the part of first nodes perform a next round of model training based on the updated prior distribution of the parameter of the first model. In addition, the second node may alternatively send the updated prior distribution of the parameter of the first model to the plurality of first nodes, so that each first node continues to select a corresponding model to perform a next round of model training.

In this solution, federated learning is implemented by exchanging prior distribution and posterior distribution of a model parameter between nodes, so that data distribution of training data in the nodes can be learned in a model training process. In addition, when obtaining a plurality of models corresponding to different data distribution, the node selects, from the plurality of models based on performance of each model in processing training data, a model closest to a training data distribution for training. This resolves a problem that training data distribution on different nodes is different, and can effectively improve effect of a model obtained through training.

In a possible implementation, a federated learning architecture includes an aggregation node and a plurality of client nodes. The second node is the aggregation node, and the plurality of first nodes are the plurality of client nodes. The method further includes: The second node sends prior distribution of parameters of a plurality of models to the plurality of first nodes, where the prior distribution of the parameters of the plurality of models includes the prior distribution of the parameter of the first model; and the second node receives indication information sent by the part of first nodes, where the indication information indicates that the posterior distribution that is of the parameter and that is sent by the part of first nodes corresponds to the first model.

In other words, the second node sends the prior distribution of the parameters of the plurality of models to each of the plurality of first nodes. In addition, the part of the plurality of first nodes select the first model, and send, to the second node, the posterior distribution that is of the parameter of the first model and that is obtained through training. In this way, the second node updates the prior distribution of the parameter of the first model based on the posterior distribution that is of the parameter of the first model and that is sent by the first node.

In a possible implementation, the method further includes: The second node receives posterior distribution that is of a parameter of a second model and that is sent by another part of first nodes in the plurality of first nodes, where the second model is one of the plurality of models. The second node updates prior distribution of the parameter of the second model based on the posterior distribution of the parameter of the second model.

In other words, when the second node sends the prior distribution of the parameters of the plurality of models to each of the plurality of first nodes, the part of first nodes choose to train the first model, and the another part of first nodes choose to train the second model. Finally, the second node updates the prior distribution of the parameter of the model based on the posterior distribution of the parameter of a same model and the model selected by each first node for training.

In a possible implementation, the federated learning architecture includes a plurality of aggregation nodes and a plurality of client nodes, and each aggregation node is responsible for one model. The second node is one of a plurality of aggregation nodes, each of the plurality of aggregation nodes is configured to send prior distribution of a parameter of a model to the plurality of first nodes, and different aggregation nodes send prior distribution of parameters of different models.

In a possible implementation, that the second node receives the posterior distribution that is of the parameter of the first model and that is sent by the part of the plurality of first nodes includes: The second node receives posterior distribution that is of a part of parameters of the first model and that is sent by the part of the plurality of first nodes; and that the second node updates the prior distribution of the parameter of the first model based on the posterior distribution of the parameter of the first model includes: the second node updates the prior distribution of the parameter of the first model based on the posterior distribution of the part of parameters of the first model.

In a possible implementation, the prior distribution of the parameter of the first model is probability distribution of the parameter of the first model or probability distribution of the probability distribution of the parameter of the first model.

A third aspect of this application provides a federated learning apparatus. The apparatus belongs to a first node, and includes:

an obtaining module, configured to obtain prior distribution of parameters of a plurality of models;
a processing module, configured to determine, based on the prior distribution of the parameters of the plurality of models and training data of the apparatus, performance of each of the plurality of models in processing the training data, where
the processing module is further configured to perform training based on prior distribution of a parameter of a first model and the training data, to obtain posterior distribution of the parameter of the first model, where the first model is one of the plurality of models, and the first model is determined in the plurality of models based on the performance of each model in processing the training data; and
a sending module, configured to send the posterior distribution of the parameter of the first model to a second node.

In a possible implementation, the obtaining apparatus is specifically configured to receive the prior distribution of the parameters of the plurality of models from the second node; and
the sending module is further configured to send, by the first node, indication information to the second node, where the indication information indicates that the posterior distribution that is of the parameter and that is sent by the first node corresponds to the first model.

In a possible implementation, the obtaining apparatus is specifically configured to separately receive prior distribution of parameters of different models from a plurality of nodes, to obtain the prior distribution of the parameters of the plurality of models, where the prior distribution of the parameter of the first model is received by the first node from the second node.

In a possible implementation, the processing module is specifically configured to:

obtain a parameter value of each of the plurality of models through sampling based on the prior distribution of the parameters of the plurality of models; and
determine, based on the parameter value of each model and the training data, the performance of each model in processing the training data.

In a possible implementation, the processing module is specifically configured to perform training based on the prior distribution of the parameter of the first model, the training data, and a selection probability of each parameter of the first model, to obtain posterior distribution of a target parameter of the first model, where the selection probability of each parameter indicates a probability of selecting each parameter as the target parameter of the first model, and the target parameter is a part of all parameters of the first model; and
the sending module is specifically configured to send the posterior distribution of the target parameter of the first model to the second node.

A fourth aspect of this application provides a federated learning apparatus. The apparatus belongs to a second node, and includes:

a sending module, configured to send prior distribution of a parameter of a first model to a plurality of first nodes;
a receiving module, configured to receive posterior distribution that is of the parameter of the first model and that is sent by a part of the plurality of first nodes; and
a processing module, configured to update the prior distribution of the parameter of the first model based on the posterior distribution of the parameter of the first model, to obtain updated prior distribution of the parameter of the first model, where
the sending module is further configured to send the updated prior distribution of the parameter of the first model to the part of first nodes.

In a possible implementation, the sending module is further configured to send prior distribution of parameters of a plurality of models to the plurality of first nodes, where the prior distribution of the parameters of the plurality of models includes the prior distribution of the parameter of the first model; and
the receiving module is further configured to receive indication information sent by the part of first nodes, where the indication information indicates that the posterior distribution that is of the parameter and that is sent by the part of first nodes corresponds to the first model.

In a possible implementation, the second node is one of a plurality of aggregation nodes, each of the plurality of aggregation nodes is configured to send prior distribution of a parameter of a model to the plurality of first nodes, and different aggregation nodes send prior distribution of parameters of different models.

In a possible implementation, the receiving module is further configured to receive posterior distribution that is of a part of parameters of the first model and that is sent by the part of the plurality of first nodes; and
the processing module is further configured to update the prior distribution of the parameter of the first model based on the posterior distribution of the part of parameters of the first model.

A fifth aspect of this application provides a federated learning apparatus, and the federated learning apparatus may include a processor, where the processor and a memory are coupled, the memory stores program instructions, and when the program instructions stored in the memory are executed by the processor, the method according to any implementation of the first aspect or the second aspect is implemented. For details about the steps performed by the processor in any possible implementation of the first aspect or the second aspect, refer to the first aspect or the second aspect. Details are not described herein again.

A sixth aspect of this application provides a computer-readable storage medium. The computer-readable storage medium stores a computer program. When the computer-readable storage medium is run on a computer, the computer is enabled to perform the method according to any implementation of the first aspect or the second aspect.

A seventh aspect of this application provides a circuit system. The circuit system includes a processing circuit, and the processing circuit is configured to perform the method according to any implementation of the first aspect or the second aspect.

An eighth aspect of this application provides a computer program product. When the computer program product runs on a computer, the computer is enabled to perform the method according to any implementation of the first aspect or the second aspect.

A ninth aspect of this application provides a chip system. The chip system includes a processor, configured to support a server or a threshold obtaining apparatus in implementing a function in any implementation of the first aspect or the second aspect, for example, sending or processing data and/or information in the foregoing method. In a possible design, the chip system further includes a memory, and the memory is configured to store program instructions and data that are necessary for a server or a communication device. The chip system may include a chip, or may include a chip and another discrete component.

For beneficial effect of the second aspect to the ninth aspect, refer to the descriptions of the first aspect. Details are not described herein again.

## BRIEF DESCRIPTION OF DRAWINGS

FIG. 1 is a diagram of a federated learning scenario according to an embodiment of this application;
FIG. 2 is a diagram of an execution process of federated learning in a related technology;
FIG. 3 is a diagram of a structure of a convolutional neural network according to an embodiment of this application;
FIG. 4 is a diagram of a structure of another convolutional neural network according to an embodiment of this application;
FIG. 5 is a diagram of a system architecture 500 according to an embodiment of this application;

FIG. 6 is a schematic flowchart of performing a federated learning method according to an embodiment of this application;

FIG. 7A is a schematic flowchart of performing federated learning by an aggregation node and a plurality of client nodes according to an embodiment of this application;

FIG. 7B is a diagram of updating a model by an aggregation node according to an embodiment of this application;

FIG. 8A is a schematic flowchart of performing federated learning by a plurality of aggregation nodes and a plurality of client nodes according to an embodiment of this application;

FIG. 8B is a diagram of updating a model by a plurality of aggregation nodes according to an embodiment of this application;

FIG. 9 is a diagram of a structure of a model obtained through parameter sparsification according to an embodiment of this application;

FIG. 10 is a diagram of a structure of a federated learning apparatus according to an embodiment of this application;

FIG. 11 is a diagram of a structure of a federated learning apparatus according to an embodiment of this application;

FIG. 12 is a diagram of a structure of an execution device according to an embodiment of this application;

FIG. 13 is a diagram of a structure of a chip according to an embodiment of this application; and

FIG. 14 is a diagram of a structure of a computer-readable storage medium according to an embodiment of this application.

## DESCRIPTION OF EMBODIMENTS

To make the objectives, technical solutions, and advantages of this application clearer and more comprehensible, the following describes embodiments of this application with reference to the accompanying drawings. It is clear that the described embodiments are only some but not all of embodiments of this application. A person of ordinary skill in the art may learn that, as a new application scenario emerges, the technical solutions provided in embodiments of this application are also applicable to a similar technical problem.

In the specification, claims, and accompanying drawings of this application, the terms "first", "second", and so on are intended to distinguish between similar objects but do not necessarily indicate a specific order or sequence. It should be understood that the descriptions termed in such a manner are interchangeable in proper cases so that embodiments can be implemented in another order than the order illustrated or described in this application. In addition, the terms "include" and "have" and any other variants thereof mean to cover the non-exclusive inclusion, for example, a process, method, system, product, or device that includes a list of steps or modules is not necessarily limited to those steps or modules, but may include other steps or modules not expressly listed or inherent to such a process, method, product, or device. Naming or numbering of steps in this application does not mean that steps in a method procedure need to be performed based on a time/logical sequence indicated by the naming or numbering. An execution sequence of procedure steps that have been named or numbered may be changed based on a technical objective to be implemented, provided that same or similar technical effect can be achieved. Unit division in this application is logical division and may be other division during actual implementation. For example, a plurality of units may be combined or integrated into another system, or some features may be ignored or not performed. In addition, the displayed or discussed mutual couplings or direct couplings or communication connections may be implemented through some interfaces. The indirect couplings or communication connections between the units may be implemented in electronic or other similar forms. This is not limited in this application. In addition, units or subunits described as separate parts may or may not be physically separate, may or may not be physical units, or may be distributed into a plurality of circuit units. Some or all of the units may be selected according to actual requirements to achieve the objectives of the solutions of this application.

For ease of understanding, the following first describes some technical terms used in embodiments of this application.

(1) Federated learning

Federated learning is essentially a model training method, and can implement data sharing and joint model building on the basis of ensuring data privacy and security and legal compliance. A core idea of the federated learning is that when a plurality of data sources participate in model training together, raw data does not need to be transferred, and joint model training is performed only by exchanging model intermediate parameters. The raw data can be retained locally. In this manner, balance between data privacy protection and data sharing and analysis, that is, a data application mode of "available and invisible data", is achieved.

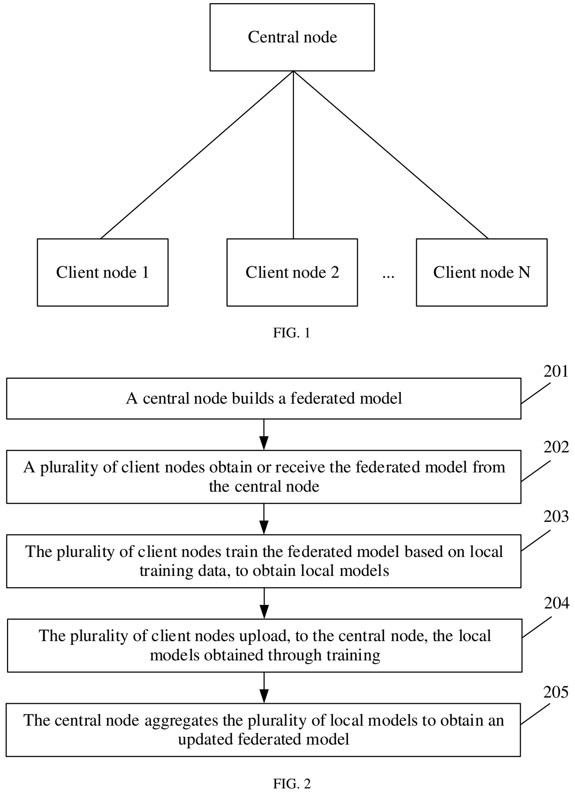

For example, FIG. 1 is a diagram of a federated learning scenario according to an embodiment of this application. The federated learning scenario may include a plurality of client nodes and a central node, where the plurality of client nodes and the central node may be any node (for example, a network node) that supports data transmission. For example, the client node may be a mobile terminal or a personal computer. The central node may be a server or a cluster server. In some embodiments, the client node may be referred to as an owner of training data, and the central node may be referred to as a coordinator in a federated learning process.

The central node can be used to maintain a federated model. The client node may obtain the federated model from the central node, and perform local training based on local training data, to obtain a local model. After obtaining the local model through training, the client node may send the local model to the central node, so that the central node updates or optimizes the federated model. This is repeatedly performed, and a plurality of rounds of iterations are performed until the federated model converges or a preset iteration stop condition is met.

A general process of federated learning is described below with reference to FIG. 2. As shown in FIG. 2, an execution process of federated learning includes the following steps 201 to 205.

Step 201: A central node builds a federated model.

The central node may build a general-purpose machine learning model, or may build a specific machine learning model based on a requirement. An image recognition task is used as an example. The central node may build a convolutional neural network (convolutional neural network, CNN) as the federated model.

Step 202: A plurality of client nodes obtain or receive the federated model from the central node.

The plurality of client nodes may obtain or receive a same federated model from the central node. For example, in an implementation, the client node may actively request the central node to deliver the federated model. Alternatively, in another implementation, the central node actively delivers the federated model to the client node. For example, the client node is a personal computer, and the central node is a server. In this case, the personal computer may download the federated model from the server.

Step 203: The plurality of client nodes train the federated model based on local training data, to obtain local models.

Specifically, the plurality of client nodes may use the federated model as an initial model of the local model, and then perform one or more steps of training on the initial model based on the local training data, to obtain the local model.

Because different client nodes have different local training data, different client nodes can obtain different local models through training based on the same federated model.

Step 204: The plurality of client nodes upload, to the central node, the local models obtained through training.

Step 205: The central node aggregates the plurality of local models to obtain an updated federated model.

For example, in an implementation, the central node may perform weighted summation on parameters of the local models of the plurality of client nodes, and use a result of the weighted summation as the updated federated model.

It should be noted that the process described in steps 201 to 205 may be considered as a round of iteration in a federated learning process. The central node and the client node may repeatedly perform steps 201 to 205 until the federated model converges or reaches preset effect.

Generally, federated learning can be used to train a machine learning model. A most common machine learning model is a neural network. The following also explains concepts related to the neural network.

(2) Neural network

The neural network may include a neuron. The neuron may be an operation unit that uses xs (namely, input data) and an intercept of 1 as an input. An output of the operation unit may be as follows:

$$h_{W,b}(x) = f(W^T x) = f(\sum_{s=1}^{n} W_s x_s + b);$$

Herein, s=1, 2, ..., and n, n is a natural number greater than 1, Ws is a weight of xs, b is a bias of the neuron, and f is an activation function (activation function) of the neuron, and is used to introduce a non-linear characteristic into the neural network, to convert an input signal in the neuron into an output signal. The output signal of the activation function may be used as an input of a next convolutional layer, and the activation function may be a sigmoid function. The neural network is a network constituted by linking a plurality of single neural units together. To be specific, an output of a neural unit may be an input of another neural unit. An input of each neuron may be connected to a local receptive field of a previous layer to extract a feature of the local receptive field. The local receptive field may be a region including several neurons.

(3) Deep neural network

The deep neural network (Deep Neural Network, DNN), also referred to as a multi-layer neural network, may be understood as a neural network having many hidden layers. The "many" herein does not have a special measurement standard. The DNN is divided based on locations of different layers, and a neural network in the DNN may be divided into three types: an input layer, a hidden layer, and an output layer. Generally, the first layer is the input layer, the last layer is the output layer, and the middle layer is the hidden layer. Layers are fully connected. To be specific, any neuron at an $i^{th}$ layer is necessarily connected to any neuron at an (i+1)$^{th}$ layer. Although the DNN seems complex, it is not complex in terms of work at each layer. In short, the DNN is the following linear relationship expression: $\vec{y} = \alpha(W\vec{x} + \vec{b})$, where $\vec{x}$ is an input vector, $\vec{y}$ is an output vector, $\vec{b}$ is an offset vector, W is a weight matrix (also referred to as a coefficient), and $\alpha()$ is an activation function. At each layer, only such a simple operation is performed on the input vector $\vec{x}$ to obtain the output vector $\vec{y}$.

Because the DNN includes a large quantity of layers, there are a large quantity of coefficients W and a large quantity of offset vectors $\vec{b}$. Definitions of these parameters in the DNN are as follows: The coefficient W is used as an example. It is assumed that in a three-layer DNN, a linear coefficient from a fourth neuron at a second layer to a second neuron at a third layer is defined as $w_{24}^{3}$. The superscript 3 represents the layer where the coefficient W is located, and the subscript corresponds to an output third-layer index 2 and an input second-layer index 4. In conclusion, a coefficient from a k$^{th}$ neuron at a (L-1)$^{th}$ layer to a j$^{th}$ neuron at a L$^{th}$ layer is defined as $W_{jk}^{L}$. It should be noted that there is no parameter W at the input layer. In the deep neural network, more hidden layers make the network more capable of describing a complex case in the real world. Theoretically, a model with more parameters has higher complexity and a larger "capacity". It indicates that the model can complete a more complex learning task. Training the deep neural network is a process of learning a weight matrix, and a final objective of the training is to obtain a weight matrix of all layers of the trained deep neural network (a weight matrix formed by vectors W at many layers).

(4) Convolutional neural network (Convolutional Neural Network, CNN)

A convolutional neural network is a deep neural network of a convolutional structure. The convolutional neural network includes a feature extractor including a convolutional layer and a sub-sampling layer. The feature extractor may be considered as a filter. A convolution process may be considered as performing convolution by using a trainable filter and an input image or a feature map (feature map). The convolution layer is a neuron layer (for example, a first convolution layer and a second convolution layer in this embodiment) that performs convolution processing on an input signal in the convolutional neural network. At the convolutional layer of the convolutional neural network, one neuron may be connected only to some adjacent-layer neurons. One convolutional layer usually includes several feature planes, and each feature plane may include some neural units that are in a rectangular arrangement. Neural units in a same feature plane share a weight, and the weight shared herein is a convolution kernel. Weight sharing may be understood as that an image information extraction manner is irrelevant to a location. A principle implied herein is that statistical information of a part of an image is the same as that of other parts. This means that image information learned in a part can also be used in another part. Therefore, image information obtained through same learning can be used for all locations on the image. At a same convolutional layer, a plurality of convolutional kernels may be used to extract different image information. Generally, a larger quantity of convolutional kernels indicates richer image information reflected in a convolution operation.

The convolution kernel may be initialized in a form of a random-size matrix. In a process of training the convolutional neural network, the convolution kernel may obtain an appropriate weight through learning. In addition, benefits directly brought by weight sharing are that connections between layers of the convolutional neural network are reduced, and an overfitting risk is reduced.

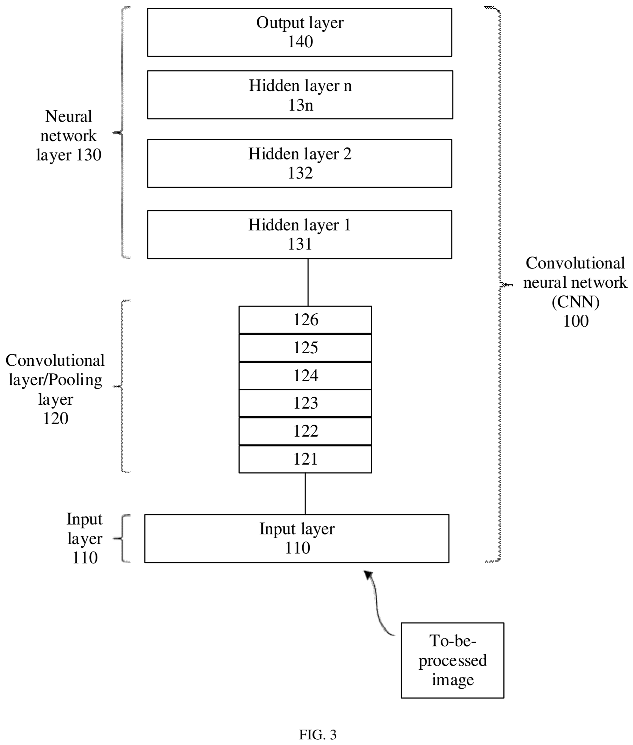

Specifically, as shown in FIG. 3, a convolutional neural network (CNN) 100 may include an input layer 110, a convolutional layer/pooling layer 120, where the pooling layer is optional, and a neural network layer 130.

A structure including the convolution layer/pooling layer 120 and the neural network layer 130 may be a first convolution layer and a second convolution layer described in this application. The input layer 110 is connected to the convolution layer/pooling layer 120, the convolution layer/pooling layer 120 is connected to the neural network layer 130, an output of the neural network layer 130 may be an input to an activation layer, and the activation layer may perform non-linear processing on the output of the neural network layer 130.

Convolutional layer/Pooling layer 120: Convolutional layer: As shown in FIG. 3, the convolutional layer/pooling layer 120 may include, for example, layers 121 to 126. In an implementation, the layer 121 is a convolutional layer, the layer 122 is a pooling layer, the layer 123 is a convolutional layer, the layer 124 is a pooling layer, the layer 125 is a convolutional layer, and the layer 126 is a pooling layer. In another implementation, the layers 121 and 122 are convolutional layers, the layer 123 is a pooling layer, the layers 124 and 125 are convolutional layers, and the layer 126 is a pooling layer. To be specific, an output of a convolutional layer may be used as an input of a subsequent pooling layer, or may be used as an input of another convolutional layer to continue to perform a convolution operation.

The convolutional layer 121 is used as an example. The convolutional layer 121 may include a plurality of convolution operators. A convolution operator is also referred to as a kernel. In image processing, the convolution operator functions as a filter that extracts specific information from an input image matrix. The convolution operator may be essentially a weight matrix, and the weight matrix is usually predefined. In a process of performing a convolution operation on an image, the weight matrix is usually used to process pixels at a granularity level of one pixel (or two pixels, which depends on a value of a stride (stride)) in a horizontal direction on the input image, to extract a specific feature from the image. A size of the weight matrix should be related to a size of the picture. It should be noted that a depth dimension (depth dimension) of the weight matrix is the same as a depth dimension of the input picture. During a convolution operation, the weight matrix extends to an entire depth of the input picture. Therefore, a convolution output of a single depth dimension is generated by performing convolution with a single weight matrix. However, in most cases, a plurality of weight matrices of a same dimension rather than a single weight matrix are applied. Outputs of the weight matrices are stacked to form a depth dimension of a convolutional image. Different weight matrices may be used to extract different features of the image. For example, one weight matrix is used to extract edge information of the image, another weight matrix is used to extract a specific color of the image, still another weight matrix is used to blur an unnecessary noise in the image, and so on. Because the plurality of weight matrices have the same dimension, feature maps extracted by using the plurality of weight matrices with the same dimension also have a same dimension. Then, the plurality of extracted feature maps with the same dimension are combined to form output of the convolution operation.

Weight values in these weight matrices need to be obtained in actual application through massive training. The weight matrices that are formed based on the weight values obtained through training may be used to extract information from the input image, to help the convolutional neural network 100 perform correct prediction.

When the convolutional neural network 100 includes a plurality of convolutional layers, a large quantity of general features are usually extracted at an initial convolutional layer (for example, the convolutional layer 121). The general feature may be also referred to as a low-level feature. As a depth of the convolutional neural network 100 increases, a feature extracted at a more subsequent convolutional layer (for example, the convolutional layer 126) is more complex, for example, a high-level semantic feature. A feature with higher semantics is more applicable to a to-be-resolved problem.

Pooling layer: A quantity of training parameters often needs to be reduced. Therefore, a pooling layer usually needs to be periodically introduced after a convolutional layer. To be specific, for the layers 121 to 126 exemplified by 120 in FIG. 3, one convolutional layer may be followed by one pooling layer, or a plurality of convolutional layers may be followed by one or more pooling layers.

Neural network layer 130: After processing performed at the convolutional layer/pooling layer 120, the convolutional neural network 100 is not ready to output required output information. As described above, at the convolutional layer/pooling layer 120, only a feature is extracted, and parameters resulting from an input image are reduced. However, to generate final output information (required class information or other related information), the convolutional neural network 100 needs to use the neural network layer 130 to generate one or a group of outputs of a quantity of required classes. Therefore, the neural network layer 130 may include a plurality of hidden layers (131, 132, ..., and 13n shown in FIG. 3) and an output layer 140. Parameters included in the plurality of hidden layers may be obtained through pre-training based on related training data of a specific task type. For example, the task type may include image recognition, image classification, super-resolution image reconstruction, and the like.

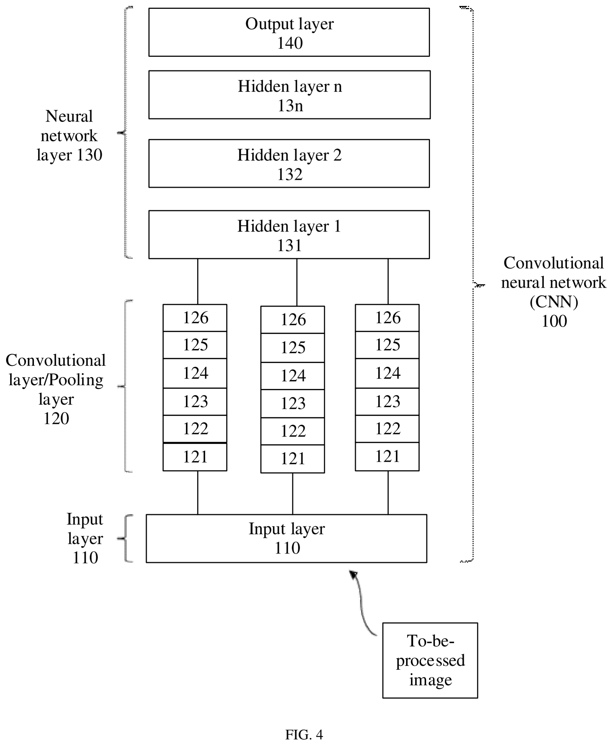

At the neural network layer 130, the plurality of hidden layers are followed by the output layer 140, namely, the last layer of the entire convolutional neural network 100. The output layer 140 has a loss function similar to categorization cross entropy, and the loss function is specifically used to calculate a prediction error. Once forward propagation (that is, propagation in a direction from 110 to 140, as shown in FIG. 4) of the entire convolutional neural network 100 is completed, back propagation (that is, propagation in a direction from 140 to 110, as shown in FIG. 4) is started to update a weight value and a deviation of each layer mentioned above, so as to reduce a loss of the convolutional neural network 100 and an error between a result output by the convolutional neural network 100 through the output layer and an ideal result.

It should be noted that the convolutional neural network 100 shown in FIG. 3 is merely used as an example of a convolutional neural network. During specific application, the convolutional neural network may alternatively exist in a form of another network model, for example, a plurality of parallel convolutional layers/pooling layers shown in FIG. 4, and extracted features are all input to the entire neural network layer 130 for processing.

(5) Bayesian neural network

Different from a common neural network, a weight parameter of a Bayesian neural network is not a definite value but a random variable, and complies with a specific probability distribution. This type of neural network can not only provide a prediction value, but also provide prediction uncertainty.

(6) Loss function

In a process of training a neural network, it is expected that an output of the neural network is as close as possible to a value that is truly expected to be predicted. Therefore, a predicted value of a current network and a target value that is truly desired may be compared, and then a weight vector of each layer of the neural network may be updated based on a difference between the predicted value of a current network and the target value that is expected to be predicted (certainly, an initialization process is usually performed before a first update, that is, a parameter is preconfigured at each layer of the neural network). For example, if a predicted value of the network is high, the weight vector is adjusted to make the prediction lower, and adjustment is continuously performed, until the neural network can predict a target value that is truly expected or a value that is very approximate to the target value that is truly expected. Therefore, "how to obtain, through comparison, a difference between the predicted value and the target value" needs to be predefined. This is a loss function (loss function) or an objective function (objective function). The loss function and the objective function are important equations that measure the difference between the predicted value and the target value. The loss function is used as an example. A higher output value (loss) of the loss function indicates a larger difference. Therefore, training of the neural network is a process of minimizing the loss as much as possible.

(7) Back propagation algorithm

In the neural network, an error back propagation (back propagation, BP) algorithm may be used to correct a value of a parameter of an initial model in a training process, so that an error loss of the model becomes increasingly small. Specifically, an input signal is transferred forward until an error loss occurs in an output, and the parameter of the initial model is updated based on back propagation error loss information, so that the error loss converges. The back propagation algorithm is an error-loss-centered back propagation motion, and is intended to obtain an optimal model parameter, for example, a weight matrix.

(8) Non-independent and identically distributed (non-independent and identically distributed, Non-IID)

In the theory of probability and science of statistics, independent and identically distributed (Independent and identically distributed, IID) means that probability distribution of each variable in a group of random variables is the same, and the random variables are independent of each other. That the group of random variables is independent and identically distributed does not mean that a probability of occurrence of each event in sample space of the group of random variables is the same. For example, a result sequence obtained by throwing a non-uniform dice is independent and identically distributed, but a probability of throwing each face upward is different.

Non-IID means that variables are not independent or are not identically distributed. In federated learning, Non-IID generally means that data is not identically distributed, because distribution of the data is definitely independent, but the data does not necessarily comply with a same sampling method. For example, a data set includes 100 types of images. A device includes only landscape images, and another device includes only portrait and plant images. The device is in one distribution (1/100), and the another device is in another distribution (2/100). Conversely, if a device includes the 100 types of images and another device also includes the 100 types of images, the two devices are identically distributed.

(9) Bayesian learning

Bayesian learning uses prior distribution of a parameter and posterior distribution obtained from sample information to directly calculate overall distribution. A Bayesian learning theory uses a probability to represent all forms of uncertainty and uses a probability rule to implement a learning and inference process. Bayesian learning has unique advantages in processing small sample data and naturally matches federated learning.

In a process in which Bayesian learning is applied to model training, it is assumed that a to-be-estimated model parameter is a random variable that obeys specific distribution, and prior distribution (also referred to as subjective distribution) of the to-be-estimated parameter may be first provided based on experience. In other words, the to-be-estimated parameter obeys a distribution status (for example, Gaussian distribution). Then, posterior distribution of the to-be-estimated parameter is obtained based on the prior distribution of the to-be-estimated parameter and sample information by using a Bayesian theorem.

(10) Neural network whose parameter obeys distribution

The neural network whose parameter obeys distribution is one of machine learning models whose parameter obeys distribution. Specifically, a parameter of a conventional neural network (such as the weight of the neuron mentioned above) has a fixed value. However, this type of neural network has an overfitting problem, to be specific, this type of neural network usually gives over-confident prediction in a region in which there is a lack of training data, and uncertainty of a prediction result cannot be accurately measured.

Compared with a neural network whose parameter has a fixed value, parameters of some neural networks obey specific distribution. For example, a parameter of a Bayesian neural network is a random variable that obeys the specific distribution, such as a random variable obeying the Gaussian distribution. A training process of a neural network whose parameters obey probability distribution is not intended to obtain a fixed value of the parameter, but aims to optimize the probability distribution of the parameter. After training is completed, parameter distribution may be sampled, and each sampled value may correspond to a neural network whose parameter has a fixed value. If a large quantity of neural networks obtained through sampling have similar prediction on specific input, it may be considered that the corresponding prediction made by the neural network for the input has relatively low uncertainty; or if a large quantity of neural networks obtained through sampling do not have similar prediction on specific input, the corresponding prediction made by the neural network for the input has relatively high uncertainty. In this manner, a neural network whose parameters obey probability distribution can represent uncertainty of prediction due to a lack of data, thereby avoiding overfitting.

(11) Prior distribution, posterior distribution, and likelihood estimation

Training of a machine learning model whose parameters obey probability distribution may be considered as estimation of probability distribution of a parameter based on a Bayesian formula. In the Bayesian formula, the prior distribution, the posterior distribution, and the likelihood estimation are three important concepts.

Prior distribution of a parameter is a pre-assumption of posterior distribution, that is, the prior distribution of the parameter is an assumption of the posterior distribution of the parameter before training data is observed. The prior distribution of the parameter may be manually specified (for example, randomly initialized), or may be obtained through data learning. In contrast, the posterior distribution of the parameter is description of distribution of the parameter after the training data is observed. In other words, the posterior distribution of the parameter is description of distribution of the parameter on a condition that the training data is known. Based on the Bayesian formula, the prior distribution, the posterior distribution, and the likelihood estimation of the parameter meet the following relationship: posterior distribution=(prior distribution likelihood x estimation)/a probability of occurrence of training data.

(12) Parametric description and non-parametric description of parameter distribution

Regardless of prior distribution or posterior distribution of a parameter, the distribution is used to describe distribution of the parameter. However, there may be a plurality of manners of specifically describing parameter distribution. This is not limited in embodiments of this application.

In some embodiments, the prior distribution and/or the posterior distribution of the parameter may use a parametric distribution description manner. For example, assuming that parameter distribution is the Gaussian distribution, the prior distribution and/or the posterior distribution of the parameter may describe the Gaussian distribution by using a mean and a variance. In some other embodiments, the prior distribution and/or the posterior distribution may use a non-parametric distribution description manner. For example, the prior distribution and/or the posterior distribution of the parameter may describe parameter distribution in a manner such as a probability histogram, a probability density, a cumulative function curve, or the like.

(13) "Point description" and "Distribution description" of prior distribution for posterior distribution

Prior distribution of a model parameter may be probability distribution of the model parameter, or may be probability distribution of the probability distribution of the model parameter.

The prior distribution is associated with the posterior distribution, to be specific, the prior distribution may be considered as pre-description of the posterior distribution, that is, a hypothetical description before training data is observed. If the prior distribution of the model parameter is the probability distribution of the model parameter, the prior distribution of this type may be understood as the "point description" for the posterior distribution; or if the prior distribution of the model parameters is the probability distribution of the probability distribution of the model parameter, the prior distribution of this type may be understood as the "distribution description" for the posterior distribution.

For example, assuming that the model parameter obeys a Gaussian distribution, when the prior distribution of the model parameter is the probability distribution of the model parameter, the prior distribution of the model parameter may be a mean and a variance of the distribution of the model parameter. From a perspective of describing the posterior distribution by using the prior distribution, this is equivalent to that a point [mean, variance] in the prior distribution is used to perform the "point description" for the posterior distribution.

For another example, it is assumed that the model parameter obeys the Gaussian distribution. When the prior distribution of the model parameter is the probability distribution of the probability distribution of the model parameter, the prior distribution of the model parameter is not a mean and a variance of the given distribution of the model parameter, but describes a probability that the mean and the variance of the distribution of the model parameter have different values. From a perspective of describing the posterior distribution by using the prior distribution, this is equivalent to that the probability that the prior distribution uses the probability distribution to perform the "distribution description" on the probability that the mean and the variance of the posterior distribution have different values (or penalties or rewards with different values).

(14) Measurement of a difference between two kinds of distribution

Some embodiments of this application relate to measurement of a difference between prior distribution and posterior distribution. There may be a plurality of manners of measuring the difference between the prior distribution and the posterior distribution, and different distribution difference measurement functions may be designed based on different manners of describing the posterior distribution by using the prior distribution, to measure the difference between the two kinds of distribution. Several examples are given below.

For example, if the prior distribution uses a "point description" for the posterior distribution, and the prior distribution uses a parametric distribution description manner, the difference between the prior distribution and the posterior distribution may be measured by using KL divergence (Kullback-Leibler divergence) of the two kinds of distribution. In other words, the KL divergence of the prior distribution and the posterior distribution may be used as a function for measuring a distribution difference between the two kinds of distribution.

For another example, if the prior distribution uses a "point description", and the prior distribution uses a non-parametric distribution description manner (for example, the prior distribution is described based on a histogram, a probability density curve, or the like), the difference between the prior distribution and the posterior distribution may be measured by calculating similarity between histograms (or probability density curves) corresponding to the two kinds of distribution. In other words, the similarity between the histograms (or the probability density curves) corresponding to the prior distribution and the posterior distribution may be used as a function for measuring a distribution difference between the two kinds of distribution. The similarity between the histograms (or the probability density curves) corresponding to the two kinds of distribution may be obtained by calculating an area difference between the two histograms (or the probability density curves) or a cosine distance between the two histograms.

For another example, if the prior distribution uses a "distribution description" for the posterior distribution, a probability that the prior distribution has a value in the posterior distribution may be used as description of the difference between the two kinds of distribution. In other words, the probability that the prior distribution has the value in the posterior distribution may be used as a function for measuring a distribution difference between the two kinds of distribution.

(15) Bernoulli distribution (the Bernoulli distribution)

Bernoulli distribution is also referred to as two-point distribution or 0-1 distribution, and is discrete probability distribution. If a random variable X takes only two values: 0 and 1, a probability that the value of the random variable X is 1 is p ($0<p<1$), and a probability that the value of the random variable X is 0 is 1-p. In this case, it may be considered that the random variable X obeys Bernoulli distribution whose parameter is p.

A quantity of successful Bernoulli tests follows the Bernoulli distribution, and the parameter p is a probability of successful tests. The Bernoulli distribution is discrete probability distribution, which is a special case of binomial distribution when N=1.

(16) Monte Carlo method

A Monte Carlo method is also referred to as a statistical simulation method or a statistical test method. The Monte Carlo method is a numerical simulation method that takes a probability phenomenon as a research object. The Monte Carlo method is a method of calculating an unknown characteristic quantity by calculating a statistical value according to a sampling survey method.

A basic idea of the Monte Carlo method is as follows: To resolve a problem, a probability model or a random process is established, so that a parameter or a digital feature of the probability model or the random process is equal to a solution of the problem. Then, the parameter or digital feature is calculated through observation or a sampling test on the model or process. Finally, an approximation value of the solution is given. Accuracy of the solution is expressed by a standard error of an estimation value. A main theoretical basis of the Monte Carlo method is a probability statistics theory, and main means are random sampling and statistical test. Generally, basic steps of resolving an actual problem by using the Monte Carlo method are as follows: 1. Construct a simple and easy-to-implement probability statistics model based on a characteristic of an actual problem, so that an obtained solution is exactly probability distribution or mathematical expectation of the problem. 2. Provide sampling methods of various random variables with different distribution in the model. 3. Collect statistics on simulation results, and provide a statistical estimation value and precision estimation value of a problem solution.

(17) Re-parameter

Re-parameterization is to perform sampling from distribution p, and the distribution has a parameter θ. If sampling is directly performed (a sampling action is discrete and undifferentiable), there is no gradient information. In this case, a parameter gradient is not updated during BP back propagation. A re-parameterization technique ensures that sampling is performed from the distribution p while retaining the gradient information.

For ease of understanding, the following first describes a system architecture to which the federated learning method provided in embodiments of this application is applied.

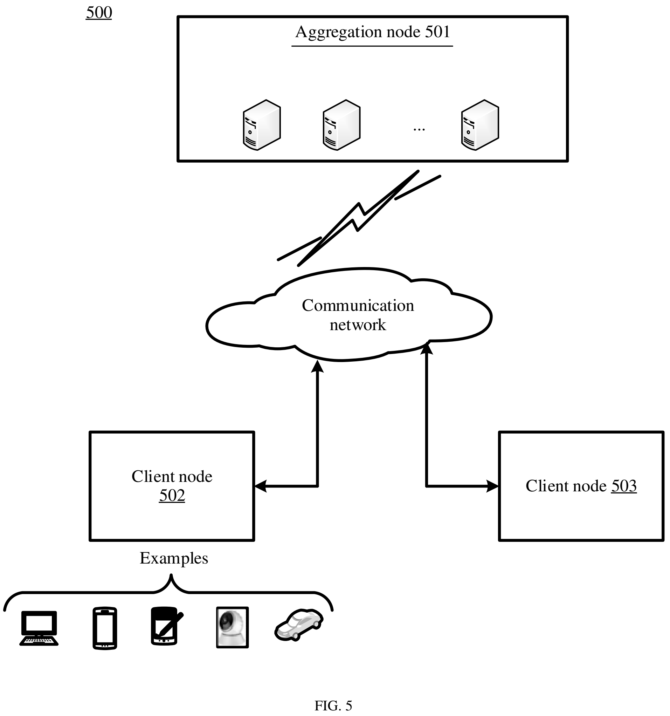

FIG. 5 is a diagram of a system architecture 500 according to an embodiment of this application. As shown in FIG. 5, in the system architecture 500, an aggregation node 501 is implemented by one or more servers. Optionally, the aggregation node 501 may cooperate with another computing device, for example, a device such as a data storage device, a router, or a load balancer. The aggregation node 501 may be disposed on one physical site, or distributed on a plurality of physical sites.

Users may operate respective user equipment (for example, a client node 502 and a client node 503) to interact with the aggregation node 501. Each client node may represent any computing device, for example, a personal computer, a computer workstation, a smartphone, a tablet computer, an intelligent camera, a smart automobile, another type of cellular phone, a media consumption device, a wearable device, a set-top box, or a game console.

Each client node may interact with the aggregation node 501 through a communication network of any communication mechanism/communication standard. The communication network may be a wide area network, a local area network, a point-to-point connection, or any combination thereof.

In a specific implementation process, the aggregation node 501 delivers prior distribution of a parameter of a model to each client node, and each client node trains the model based on local training data, to obtain posterior distribution of the parameter of the model. Then, the client node uploads the posterior distribution of the parameter of the model to the aggregation node 501, and the aggregation node 501 updates the prior distribution of the parameter of the model. The aggregation node 501 works with each client node to implement model training by cyclically performing the foregoing steps.

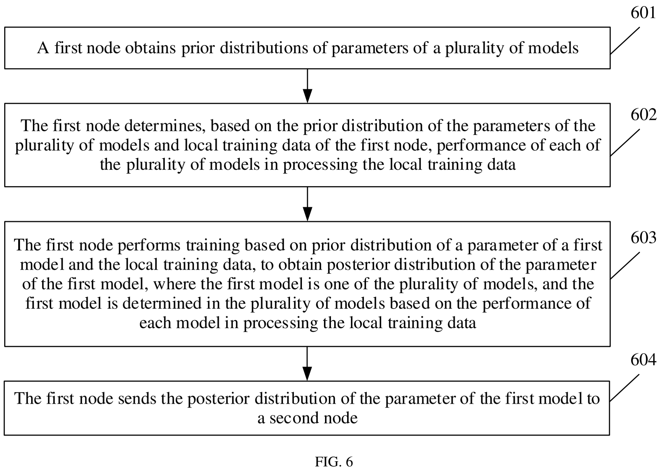

FIG. 6 is a schematic flowchart of performing a federated learning method according to an embodiment of this application. As shown in FIG. 6, the federated learning method includes the following steps 601 to 604.

Step 601: A first node obtains prior distribution of parameters of a plurality of models.

In this embodiment, the first node may be, for example, the foregoing client node, and is configured to train an obtained model based on training data. The prior distribution of the parameters of the plurality of models may be obtained by the first node from one or more nodes. For example, the first node obtains the prior distribution of the parameters of the plurality of models from a second node. For another example, the first node separately obtains the prior distribution of the parameter of each model from the plurality of nodes, to obtain the prior distribution of the parameters of the plurality of models.

The plurality of models mentioned in this embodiment are all machine learning models whose parameters obey distribution. In some embodiments, the model is a neural network whose parameter obeys distribution, and a parameter of the model may be a neuron parameter of a neural network. For example, the model may be a Bayesian neural network. Further, in some embodiments, a parameter of the Bayesian neural network obeys Gaussian distribution, delta (delta) distribution, or other distribution.

In addition, the plurality of models may be models with a same structure, but the distribution of the parameters of the plurality of models is different. Therefore, the prior distribution that is of the parameters of the plurality of models and that is obtained by the first node actually includes prior distribution of a parameter of each of the plurality of models.

In short, it is assumed that the plurality of models include five models in total: a model 1 to a model 5. Because structures of the model 1 to the model 5 are the same, the model 1 to the model 5 have a same quantity of parameters, for example, a parameter 1 to a parameter 1000. For different models, parameters of different models obey different distribution. For example, distribution that the parameter 1 of the model 1 obeys is Gaussian distribution A1, distribution that the parameter 1 of the model 2 obeys is Gaussian distribution A2, ..., and distribution that the parameter 1 of the model 5 obeys is Gaussian distribution A5. For another example, distribution that the parameter 2 of the model 1 obeys is Gaussian distribution B 1, distribution that the parameter 2 of the model 2 obeys is Gaussian distribution B2, ..., and distribution that the parameter 2 of the model 5 obeys is Gaussian distribution B5.

Step 602: The first node determines, based on the prior distribution of the parameters of the plurality of models and training data of the first node, performance of each of the plurality of models in processing the training data.

In this embodiment, because the first node obtains the prior distribution of the parameter of the model instead of the parameter with a fixed value, the first node may sample each parameter of the model based on the prior distribution of each parameter of the model, to obtain a sampled value of each parameter of the model. For example, when the prior distribution of the parameter of the model is Gaussian distribution, the first node can determine, based on a mean and a variance in the Gaussian distribution, a value range of the parameter of the model and a probability of taking each value of the parameter. In this way, the first node may sample the value of the parameter based on the probability of each value of the parameter, to obtain a sampled value of the parameter.

For example, the first node obtains a parameter value of each of the plurality of models through sampling based on the prior distribution of the parameters of the plurality of models, that is, obtains a specific value of each parameter of each model. Then, the first node determines, based on the parameter value of each model and the training data, the performance of each model in processing the training data. After determining the parameter value of each model, the first node may obtain a model whose parameter is a fixed value. Therefore, the first node may separately input the training data into each model, to obtain the performance of each model in processing the training data.

In another possible example, for prior distribution of parameters in a same model, the first node may perform sampling on each parameter of the model for a plurality of times based on the prior distribution of the parameters of the model, to obtain a plurality of sampled values of each parameter of the model. Further, a plurality of sampling models with different parameter sampled values are obtained. The first node may separately determine performance in processing the training data of a plurality of sampling models with different parameter sampled values, and obtain corresponding model performance by comprehensively considering performance in processing the training data of the plurality of sampling models. In this way, the plurality of sampling models are obtained by performing sampling on the parameter of the model for a plurality of times. Performance of a corresponding model is obtained by combining performance of the plurality of sampling models, so that randomness impact caused by random sampling can be effectively avoided. Further, the performance of each model is accurately evaluated based on the prior distribution of the parameter of each model.

The training data of the first node may be training data locally stored in the first node, or the training data of the first node may be training data stored in a cloud server or a database connected to the first node.

Optionally, the performance of each model in processing the training data includes one or more of the following: model accuracy (that is, model precision), a model confidence level, a model convergence speed, and a gradient forward direction of the model during training.

Specifically, the training data in the first node may be training data with a label. The first node inputs the training data into a model whose parameter is a sampled value, to obtain a prediction result output by the model. In this way, the first node may determine, by comparing the prediction result output by the model with the label of the training data, whether the prediction result output by the model is accurate, and further determine model accuracy.

For example, when the model is an image classification model, after the first node inputs the image used as the training data into the model, a classification prediction result output by the model may be obtained. Then, the first node compares the classification prediction result with a category label of the image, to determine whether the classification prediction result output by the model is accurate. A large quantity of images are input into the model, and accuracy of processing these images by the model is determined. Finally, model accuracy may be obtained by combining accuracy of processing each image by the model.

A model confidence level is a confidence level of the prediction result output by the model. A higher model confidence level indicates a higher confidence level of the prediction result output by the model, that is, lower uncertainty. A lower model confidence level indicates a lower confidence level of the prediction result output by the model, that is, higher uncertainty.

A model convergence speed is a speed at which the model approaches a local optimal value (that is, a converged model) during training. A faster model convergence speed indicates that a parameter of the current model is closer to the local optimal value, and model performance is better. A slower model convergence speed indicates that a parameter of the current model is farther away from the local optimal value, and model performance is poorer.

A gradient direction of the model during training refers to a direction in which a function value at each point decreases most. In a gradient method (gradient method), a value of a function advances by a specific distance along a gradient direction from a current position. Then a gradient is re-calculated at a new position, and then the value advances along the new gradient direction. In this way, the value continuously advances along the gradient direction. A better gradient forward direction of the model during training indicates a faster model convergence speed and better model performance. A worse gradient forward direction of the model during training indicates a slower model convergence speed and poorer model performance.

Step 603: The first node performs training based on prior distribution of a parameter of a first model and the training data, to obtain posterior distribution of the parameter of the first model, where the first model is one of the plurality of models, and the first model is determined in the plurality of models based on the performance of each model in processing the training data.

After determining the performance of each of the plurality of models in processing the training data, the first node may select, from the plurality of models based on performance corresponding to each model, the first model with optimal performance in processing the training data. If the first model has optimal performance when processing the training data, it indicates that the prior distribution of the parameter of the first model is most fit for distribution of the training data in the first node. Therefore, the first node selects the first model for further training.

The prior distribution of the parameter of the first model is probability distribution of the parameter of the first model or probability distribution of the probability distribution of the parameter of the first model. Similarly, when the prior distribution of the parameter of the first model is the probability distribution of the parameter of the first model, the posterior distribution of the parameter of the first model is the probability distribution of the parameter of the first model. When the prior distribution of the parameter of the first model is the probability distribution of the probability distribution of the parameter of the first model, the posterior distribution of the parameter of the first model is the probability distribution of the probability distribution of the parameter of the first model.

Step 604: The first node sends the posterior distribution of the parameter of the first model to a second node.

After obtaining the posterior distribution of the parameter of the first model through training, the first node sends the posterior distribution of the parameter of the first model to the second node, so that the second node updates the prior distribution of the parameter of the first model based on the posterior distribution of the parameter of the first model.

The second node may be an aggregation node, and is configured to update the prior distribution of the parameter of the model based on posterior distribution of a parameter of the model uploaded by each client node.

It may be understood that the foregoing steps 601 to 604 are described by using the first node as a client node in federated learning. In an actual federated learning process, each client node may obtain the prior distribution of the parameters of the plurality of models, select, based on the foregoing steps 601 to 604, one of the models for training, and send, to a corresponding aggregation node, the posterior distribution that is of the parameter of the model and that is obtained through training. In this way, the aggregation node may obtain posterior distribution of parameters of models sent by different client nodes. Different client nodes may select different models for training. Therefore, the aggregation node updates prior distribution of a parameter of a model based on posterior distribution of parameters corresponding to a same model.

In this solution, federated learning is implemented by exchanging prior distribution and posterior distribution of a model parameter between nodes, so that data distribution of training data in the nodes can be learned in a model training process. In addition, when obtaining a plurality of models corresponding to different data distribution, the node selects, from the plurality of models based on performance of each model in processing training data, a model closest to a training data distribution for training. This resolves a problem that training data distribution on different nodes is different, and can effectively improve effect of a model obtained through training.

In addition, the machine learning model whose parameter obeys distribution can give probabilities of various values of a parameter in advance, and probabilities of the various values of the parameter can represent advantages and disadvantages of various possible improvement directions of the machine learning model. Therefore, performing federated learning on the machine learning model whose parameter obeys a distribution helps a node participating in federated learning to find a better improvement direction of the machine learning model, thereby reducing training time and overheads of communication between the nodes.

For ease of understanding, the following describes a complete execution procedure of federated learning provided in this embodiment when federated learning is applied to a specific scenario.

Scenario 1: The aggregation node delivers the prior distribution of the parameters of the plurality of models to each client node, and the client node selects one of the models for training and uploads, to the aggregation node, the posterior distribution that is of the parameter of the model and that is obtained through training. In addition, the aggregation node updates the prior distribution of the parameter of the model based on the posterior distribution that is of the parameters of the same model and that is uploaded by different client nodes.

For example, in step 601, the first node serving as the client node may receive the prior distribution of the parameters of the plurality of models from the second node serving as the aggregation node. In addition, in step 604, because the first node selects the first model from the plurality of models for training, when the first node sends the posterior distribution of the parameter of the first model to the second node, the first node further sends indication information to the second node, where the indication information indicates that the posterior distribution that is of the parameter and that is sent by the first node corresponds to the first model. In other words, after the first node selects the first model from the plurality of models for training, when uploading the posterior distribution of the parameter of the first model, the first node further needs to notify the second node that the model selected by the first node is the first model.

Because the second node delivers the prior distribution of the parameters of the plurality of models to the plurality of client nodes, a part of the plurality of client nodes usually choose to train the first model of the plurality of models, and another part of client nodes choose to train other models in the plurality of models. Therefore, the second node may receive the posterior distribution that is of the parameters of the first model and that is uploaded by the part of client nodes. In this way, the second node may update the prior distribution of the parameter of the first model based on the posterior distribution that is of the parameter of the first model and that is uploaded by the part of client nodes.

After the second node updates the prior distribution of the parameter of each model based on the posterior distribution of the parameter of the model uploaded by each client node, the second node may continue to deliver the prior distribution of the parameter of the model to each client node, so that each client node cyclically performs model training. In this way, a federated learning process is completed.

It should be noted that the second node may not need to deliver the prior distribution of the parameters of the plurality of models to each client node in each round of iteration process. The second node may deliver the prior distribution of the parameters of the plurality of models to each client node at an interval of several rounds of iteration. After the second node delivers the prior distribution of the parameters of the plurality of models to each client node, and the client node feeds back, to the second node, a model selected by the client node for training, in a subsequent several rounds of iteration process, the second node sends, to the client node, only prior distribution of a parameter of the model selected by the second node for training.

For example, it is assumed that the second node delivers the prior distribution of the parameters of the plurality of models to each client node at an interval of three rounds of iteration process. In this case, after the second node delivers the prior distribution of the parameters of the plurality of models to each client node in a first round of iteration process, a client node 1 feeds back, to the second node, that a model selected by the client node 1 for training is a model 1. In a subsequent second round, third round, and fourth round of iteration process, the second node sends only prior distribution of a parameter of the model 1 to the client node 1. In a fifth round of iteration process, the second node sends the prior distribution of the parameters of the plurality of models to the client node 1.

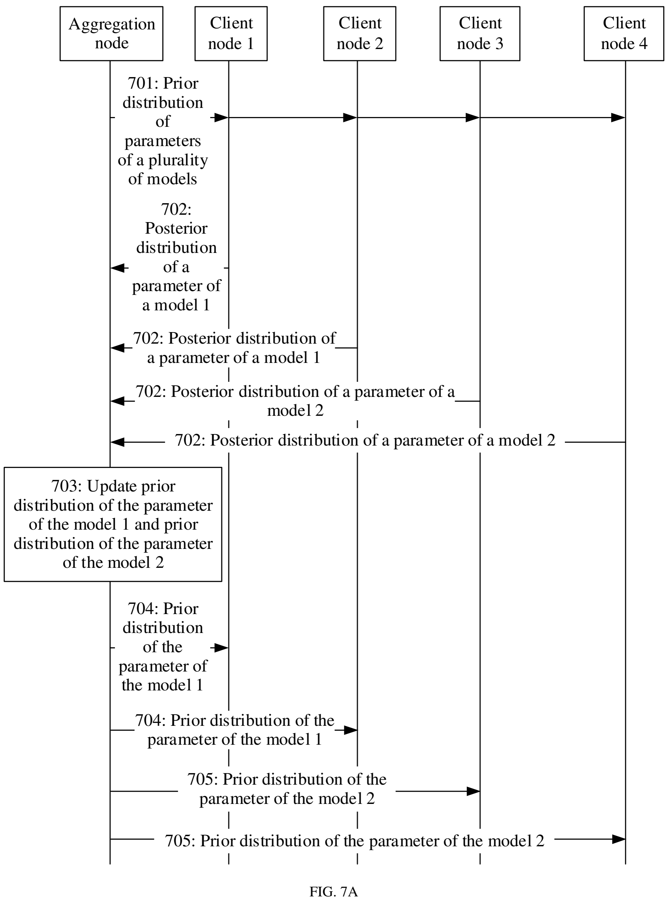

For example, FIG. 7A is a schematic flowchart of performing federated learning by an aggregation node and a plurality of client nodes according to an embodiment of this application. As shown in FIG. 7A, a procedure in which the aggregation node and the plurality of client nodes perform federated learning includes the following steps 701 to 705.

Step 701: An aggregation node sends prior distribution of parameters of a plurality of models to a client node 1 to a client node 4.

The plurality of models have a same structure, but the parameters of the plurality of models have different prior distribution. In addition, in this embodiment, the plurality of models include a model 1 and a model 2.

Before federated learning starts, the aggregation node may generate or initialize prior distribution of a parameter of the model 1 and prior distribution of a parameter of the model 2 based on a possible distribution status of data in each client node. In addition, the aggregation node may alternatively separately generate the prior distribution of the parameter of the model 1 and the prior distribution of the parameter of the model 2 in a random initialization manner. This is not specifically limited in this embodiment.

For example, the aggregation node is, for example, the second node in the foregoing embodiment, and the client node 1 is, for example, the first node in the foregoing embodiment.

Step 702: The client node 1 and the client node 2 send posterior distribution of the parameter of the model 1 to the aggregation node, and the client node 3 and the client node 4 send posterior distribution of the parameter of the model 2 to the aggregation node.

Specifically, after each client node receives the prior distribution that is of the parameters of the plurality of models and that is sent by the aggregation node, each client node may select, based on the prior distribution of the parameters of each model, a model that needs to be trained, and perform model training based on the training data and prior distribution of a parameter of the selected model.

In this embodiment, the client node 1 and the client node 2 select to train the model 1. In other words, the prior distribution of the parameter of the model 1 fits data distribution in the client node 1 and the client node 2. The client node 3 and the client node 4 select to train the model 2. In other words, the prior distribution of the parameter of the model 2 fits data distribution in the client node 3 and the client node 4.

In this way, after obtaining the posterior distribution of the parameter of the model 1 through training, the client node 1 and the client node 2 send, to the aggregation node, the posterior distribution that is of the parameter of the model 1 and that is obtained through training. After obtaining the posterior distribution of the parameter of the model 2 through training, the client node 3 and the client node 4 send, to the aggregation node, the posterior distribution that is of the parameter of the model 2 and that is obtained through training.

It should be noted that models selected by the client node 1 and the client node 2 for training are the same (that is, both are the model 1), but posterior distribution of parameters of the model 1 obtained by the client node 1 and the client node 2 is different. Similarly, posterior distribution of parameters of the model 1 obtained by the client node 3 and the client node 4 is different.

In addition, the client node 1 and the client node 2 further send indication information to the aggregation node, to indicate that the model selected by the client node 1 and the client node 2 for training is the model 1. The client node 3 and the client node 4 further send indication information to the aggregation node, to indicate that the model selected by the client node 3 and the client node 4 for training is the model 2.

Step 703: The aggregation node updates the prior distribution of the parameter of the model 1 based on the posterior distribution that is of the parameter of the model 1 and that is sent by the client node 1 and the client node 2, and updates the prior distribution of the parameter of the model 2 based on the posterior distribution that is of the parameter of the model 2 and that is sent by the client node 3 and the client node 4.

It may be understood that, because the client node 1 and the client node 2 select to train the model 1, and the client node 3 and the client node 4 select to train the model 2, when the aggregation node updates the prior distribution of the parameter of the model 1, the aggregation node is based on the posterior distribution of the parameter of the model 1 sent by the client node 1 and the client node 2. When updating the prior distribution of the parameter of the model 2, the aggregation node is based on the posterior distribution of the parameter of the model 2 sent by the client node 3 and the client node 4.

In this way, the aggregation node can aggregate training data that belongs to or is close to a model trained by a client node in same distribution, so that prior distribution of a parameter of a model obtained by the aggregation node through aggregation can be closer to data distribution on each client node. In this way, a problem that training data is distributed differently on different nodes is resolved, and effect of the model obtained through training can be effectively improved.

Step 704: The aggregation node sends the prior distribution of the parameter of the model 1 to the client node 1 and the client node 2.

After the aggregation node updates the prior distribution of the parameter of the model 1, the aggregation node may send the updated prior distribution of the parameter of the model 1 to the client node 1 and the client node 2, so that the client node 1 and the client node 2 continue to train the model 1.

Step 705: The aggregation node sends the prior distribution of the parameter of the model 2 to the client node 3 and the client node 4.

After the aggregation node updates the prior distribution of the parameter of the model 2, the aggregation node may send the updated prior distribution of the parameter of the model 2 to the client node 3 and the client node 4, so that the client node 3 and the client node 4 continue to train the model 2.

In general, in this solution, actually, the aggregation node establishes, in advance based on a possible data distribution status on each client node, a plurality of models respectively corresponding to different data distribution types, and delivers the plurality of models to each client node. The client node selects, based on the training data, a model that is closest to local data distribution. In addition, after each client node uploads posterior distribution of a parameter of a corresponding model, the aggregation node separately aggregates a corresponding model, to separately aggregate the model based on the data distribution type. In this way, finally obtained prior distribution of the parameter of the model can better indicate a distribution status of the training data in the client node, thereby resolving a problem that training data is distributed differently on different nodes, and effectively improving effect of the model obtained through training.

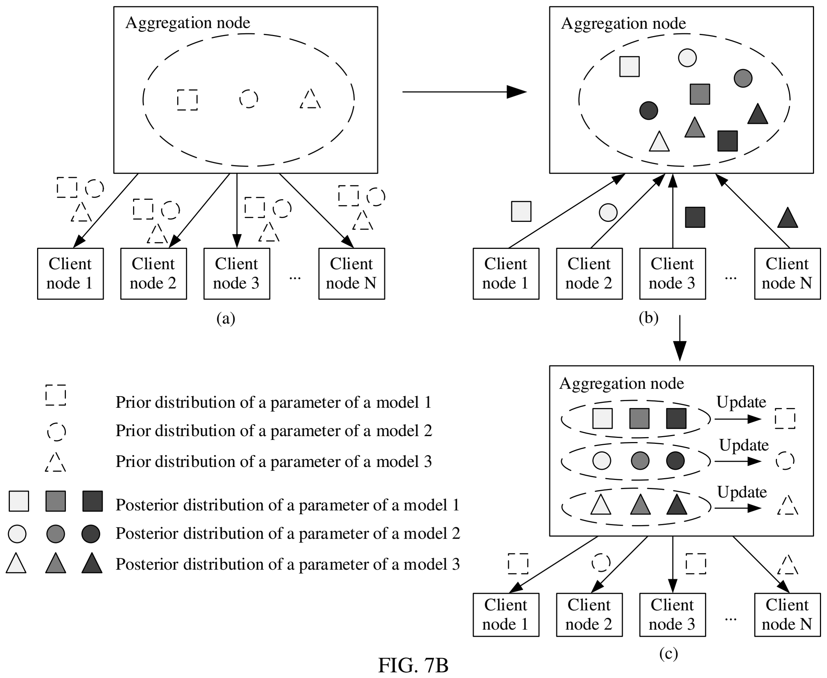

For example, FIG. 7B is a diagram of updating a model by an aggregation node according to an embodiment of this application. As shown in FIG. 7B, in (a) in FIG. 7B, the aggregation node separately has the prior distribution of the parameter of the model 1, the prior distribution of the parameter of the model 2, and prior distribution of a parameter of the model 3. In addition, in the first round of iteration process, the aggregation node delivers the prior distribution of the parameter of the model 1, the prior distribution of the parameter of the model 2, and the prior distribution of the parameter of the model 3 to each client node (that is, the client node 1 to a client node N).

In (b) in FIG. 7B, after receiving the prior distribution of the parameters of the three models, each client node selects, based on the training data and the prior distribution of the parameters of the three models, a model closest to the distribution of the training data for training, and sends, to the aggregation node, the posterior distribution that is of the parameter of the model and that is obtained through training. The client node 1 selects to train the model 1, and sends the posterior distribution that is of the parameter of the model 1 and that is obtained through training to the aggregation node. The client node 2 selects to train the model 2, and sends the posterior distribution that is of the parameter of the model 2 and that is obtained through training to the aggregation node. The client node 3 selects to train the model 1, and sends the posterior distribution that is of the parameter of the model 1 and that is obtained through training to the aggregation node.... The client node N selects to train the model 3, and sends the posterior distribution that is of the parameter of the model 3 and that is obtained through training to the aggregation node. In this way, the aggregation node may receive posterior distribution of parameters of models uploaded by different client nodes.

In (c) in FIG. 7B, the aggregation node updates the prior distribution of the parameter of the model based on posterior distribution that is of parameters of a same model and that is uploaded by different client nodes, to obtain the updated prior distribution of the parameter of the model. Specifically, for the model 1, the aggregation node updates the prior distribution of the parameter of the model 1 based on the posterior distribution that is of the parameter of the model 1 and that is uploaded by different client nodes, to obtain the updated prior distribution of the parameter of the model 1. For the model 2, the aggregation node updates the prior distribution of the parameter of the model 2 based on the posterior distribution that is of the parameter of the model 2 and that is uploaded by different client nodes, to obtain the updated prior distribution of the parameter of the model 2. For the model 3, the aggregation node updates the prior distribution of the parameter of the model 3 based on the posterior distribution that is of the parameter of the model 3 and that is uploaded by different client nodes, to obtain the updated prior distribution of the parameter of the model 3.

Then, with reference to a model selected by each client node for training, the aggregation node separately sends prior distribution of a parameter of a corresponding updated model to each client node. For example, the aggregation node sends the updated prior distribution of the parameter of the model 1 to the client node 1. The aggregation node sends the updated prior distribution of the parameter of the model 2 to the client node 2. The aggregation node sends the updated prior distribution of the parameter of the model 1 to the client node 3. The aggregation node sends the updated prior distribution of the parameter of the model 3 to the client node N.

Scenario 2: The federated learning process is decentralized. To be specific, the federated learning process includes a plurality of aggregation nodes in total, and each aggregation node is responsible for aggregating models corresponding to different data distribution.

In the federated learning process, each aggregation node delivers prior distribution of a parameter of a model to each client node. In other words, each client node receives prior distribution of parameters of a plurality of models, and prior distribution of parameters of different models are from different aggregation nodes. Then, the client node selects one of the models for training, and uploads, to an aggregation node corresponding to the model, posterior distribution that is of a parameter of the model and that is obtained through training. In addition, the aggregation node updates the prior distribution of the parameter of the model based on the posterior distribution that is of the parameters of the same model and that is uploaded by different client nodes.

For example, in step 601, the first node may separately receive prior distribution of parameters of different models from a plurality of nodes, to obtain the prior distribution of the parameters of the plurality of models, where the prior distribution of the parameter of the first model is received by the first node from the second node. In this way, after the first node selects the first model from the plurality of models for training, and obtains the posterior distribution of the parameter of the first model, the first node sends the posterior distribution of the parameter of the first model to the second node.

In short, compared with the scenario 1 in which one aggregation node is responsible for aggregation of a plurality of models corresponding to different data distribution, in the scenario 2, a plurality of aggregation nodes are respectively responsible for aggregation of a plurality of models corresponding to different data distribution, and each aggregation node corresponds to only one model. In this way, when obtaining the posterior distribution of the parameter of the model through training, the client node only needs to send the posterior distribution of the parameter of the model to the aggregation node corresponding to the model. This avoids that all client nodes send the posterior distribution of the parameter of the model to a same aggregation node, avoids network congestion, reduces processing load of the aggregation node, reduces a risk caused by a fault of a single aggregation node, and improves information security.

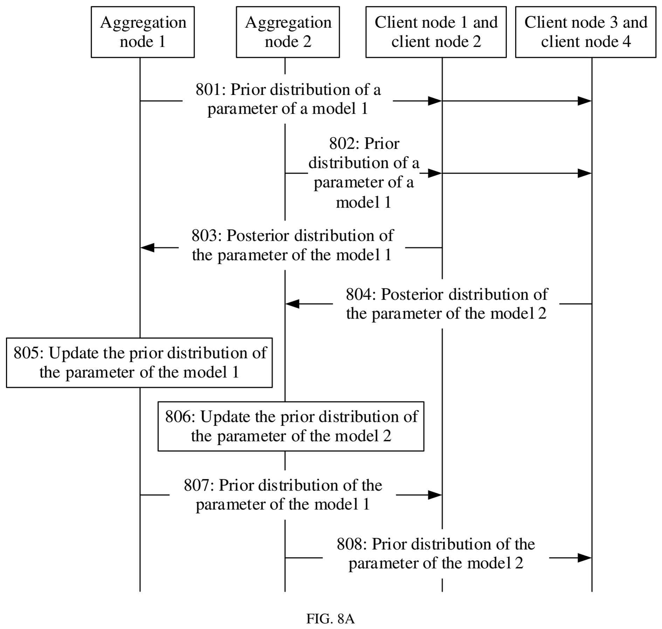

For example, FIG. 8A is a schematic flowchart of performing federated learning by a plurality of aggregation nodes and a plurality of client nodes according to an embodiment of this application. As shown in FIG. 8A, a procedure in which the plurality of aggregation nodes and the plurality of client nodes perform federated learning includes the following steps 801 to 808.

Step 801: An aggregation node 1 sends prior distribution of a parameter of a model 1 to a client node 1 to a client node 4.

Before federated learning starts, the aggregation node 1 may generate or initialize the prior distribution of the parameter of the model 1 based on a possible distribution status of data in each client node. In addition, the aggregation node 1 may alternatively separately generate the prior distribution of the parameter of the model 1 in a random initialization manner. This is not specifically limited in this embodiment.

For example, the aggregation node 1 is, for example, the second node in the foregoing embodiment, and the client node 1 is, for example, the first node in the foregoing embodiment.

Step 802: An aggregation node 2 sends prior distribution of a parameter of a model 2 to the client node 1 to the client node 4.

Similarly, the aggregation node 2 may also generate or initialize the prior distribution of the parameter of the model 1 based on the possible distribution status of the data in each client node. In addition, the aggregation node 2 may alternatively separately generate the prior distribution of the parameter of the model 1 in the random initialization manner. This is not specifically limited in this embodiment.

It should be noted that, in this embodiment, structures of the model 1 and the model 2 are the same. However, the prior distribution of the parameter of the model 1 generated by the aggregation node 1 is different from the prior distribution of the parameter of the model 2 generated by the aggregation node 2.

Step 803: The client node 1 and the client node 2 send the posterior distribution of the parameter of the model 1 to the aggregation node 1.

Specifically, after each client node receives the prior distribution that is of the parameters of the plurality of models and that is sent by the aggregation node 1 and the aggregation node 2, each client node may select, based on the prior distribution of the parameters of each model, a model that needs to be trained, and perform model training based on the training data and prior distribution of a parameter of the selected model.

In this embodiment, the client node 1 and the client node 2 select to train the model 1. In other words, the prior distribution of the parameter of the model 1 fits data distribution in the client node 1 and the client node 2.

In this way, after obtaining the posterior distribution of the parameter of the model 1 through training, the client node 1 and the client node 2 send, to the aggregation node 1, the posterior distribution that is of the parameter of the model 1 and that is obtained through training.

Step 804: The client node 3 and the client node 4 send the posterior distribution of the parameter of the model 2 to the aggregation node 2.

In this embodiment, the client node 3 and the client node 4 select to train the model 2. In other words, the prior distribution of the parameter of the model 2 fits data distribution in the client node 3 and the client node 4. After obtaining the posterior distribution of the parameter of the model 2 through training, the client node 3 and the client node 4 send, to the aggregation node, the posterior distribution that is of the parameter of the model 2 and that is obtained through training.

It should be noted that models selected by the client node 1 and the client node 2 for training are the same (that is, both are the model 1), but posterior distribution of parameters of the model 1 obtained by the client node 1 and the client node 2 is different. Similarly, posterior distribution of parameters of the model 1 obtained by the client node 3 and the client node 4 is different.

Step 805: The aggregation node 1 updates the prior distribution of the parameter of the model 1 based on the posterior distribution that is of the parameter of the model 1 and that is sent by the client node 1 and the client node 2.

Step 806: The aggregation node 2 updates the prior distribution of the parameter of the model 2 based on the posterior distribution that is of the parameter of the model 2 and that is sent by the client node 3 and the client node 4.

Step 807: The aggregation node 1 sends the prior distribution of the parameter of the model 1 to the client node 1 and the client node 2.

After the aggregation node 1 updates the prior distribution of the parameter of the model 1, the aggregation node 1 may send the updated prior distribution of the parameter of the model 1 to the client node 1 and the client node 2, so that the client node 1 and the client node 2 continue to train the model 1.

Step 808: The aggregation node 2 sends the prior distribution of the parameter of the model 2 to the client node 3 and the client node 4.

After the aggregation node 2 updates the prior distribution of the parameter of the model 2, the aggregation node 2 may send the updated prior distribution of the parameter of the model 2 to the client node 3 and the client node 4, so that the client node 3 and the client node 4 continue to train the model 2.

In general, in this solution, actually, the plurality of aggregation nodes establish, in advance based on the data distribution status on each client node, the models respectively corresponding to the different data distribution types. The plurality of aggregation nodes respectively deliver the models to the client nodes. The client node selects, based on the training data, the model that is closest to the local data distribution. In addition, after each client node uploads the posterior distribution of the parameter of the corresponding model to the corresponding aggregation node, the aggregation node separately aggregates a corresponding model, to separately aggregate the model based on the data distribution type. In this way, finally obtained prior distribution of the parameter of the model can better indicate a distribution status of the training data in the client node, thereby resolving a problem that training data is distributed differently on different nodes, and effectively improving effect of the model obtained through training.

In addition, when obtaining the posterior distribution of the parameter of the model through training, the client node only needs to send the posterior distribution of the parameter of the model to the aggregation node corresponding to the model. This avoids that all client nodes send the posterior distribution of the parameter of the model to a same aggregation node, avoids network congestion, reduces processing load of the aggregation node, reduces a risk caused by a fault of a single aggregation node, and improves information security.

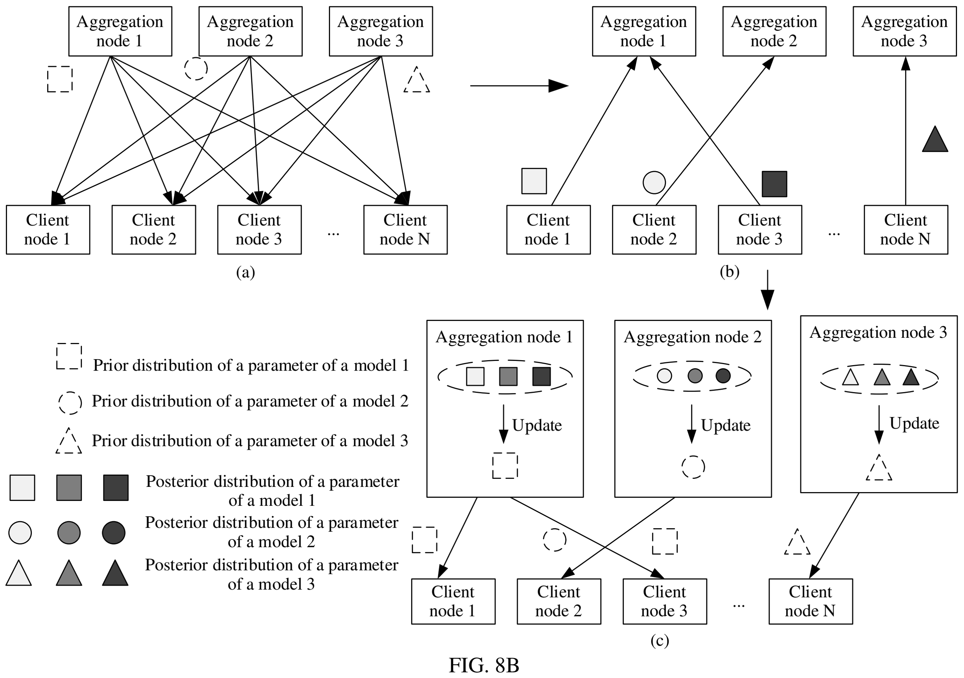

For example, refer to FIG. 8B. FIG. 8B is a diagram of updating a model by a plurality of aggregation nodes according to an embodiment of this application. As shown in FIG. 8B, in (a) in FIG. 8B, the aggregation node 1 has the prior distribution of the parameter of the model 1, the aggregation node 2 has the prior distribution of the parameter of the model 2, and the aggregation node 3 has the prior distribution of the parameter of the model 3. In addition, in the first round of iteration process, the aggregation node 1 to the aggregation node 3 respectively deliver, to each client node, prior distribution of a parameter of a model of each client node. To be specific, the aggregation node 1 delivers the prior distribution of the parameter of the model 1 to each client node, the aggregation node 2 delivers the prior distribution of the parameter of the model 2 to each client node, and the aggregation node 3 delivers the prior distribution of the parameter of the model 3 to each client node.

In (b) in FIG. 8B, after receiving the prior distribution of the parameters of the three models, each client node selects, based on the training data and the prior distribution of the parameters of the three models, a model closest to the distribution of the training data for training, and sends, to the aggregation node, the posterior distribution that is of the parameter of the model and that is obtained through training. The client node 1 selects to train the model 1, and sends the posterior distribution that is of the parameter of the model 1 and that is obtained through training to the aggregation node 1. The client node 2 selects to train the model 2, and sends the posterior distribution that is of the parameter of the model 2 and that is obtained through training to the aggregation node 2. The client node 3 selects to train the model 1, and sends the posterior distribution that is of the parameter of the model 1 and that is obtained through training to the aggregation node 1.... The client node N selects to train the model 3, and sends the posterior distribution that is of the parameter of the model 3 and that is obtained through training to the aggregation node 3. In this way, the aggregation node 1 to the aggregation node 3 may receive posterior distribution of parameters of models uploaded by different client nodes.

In (c) in FIG. 8B, each aggregation node updates the prior distribution of the parameter of the model based on posterior distribution that is of parameters of a same model and that is uploaded by different client nodes, to obtain updated prior distribution of the parameter of the model. Specifically, for the model 1, the aggregation node 1 updates the prior distribution of the parameter of the model 1 based on the posterior distribution that is of the parameter of the model 1 and that is uploaded by different client nodes, to obtain the updated prior distribution of the parameter of the model 1. For the model 2, the aggregation node 2 updates the prior distribution of the parameter of the model 2 based on the posterior distribution that is of the parameter of the model 2 and that is uploaded by different client nodes, to obtain the updated prior distribution of the parameter of the model 2. For the model 3, the aggregation node 3 updates the prior distribution of the parameter of the model 3 based on the posterior distribution that is of the parameter of the model 3 and that is uploaded by different client nodes, to obtain the updated prior distribution of the parameter of the model 3.

Then, with reference to a model selected by each client node for training, the aggregation node 1 to the aggregation node 3 send prior distribution of a parameter of an updated model to a corresponding client node. For example, the aggregation node 1 sends the updated prior distribution of the parameter of the model 1 to the client node 1. The aggregation node 2 sends the updated prior distribution of the parameter of the model 2 to the client node 2. The aggregation node 1 sends the updated prior distribution of the parameter of the model 1 to the client node 3. The aggregation node 3 sends the updated prior distribution of the parameter of the model 3 to the client node N.

The foregoing describes an execution procedure of federated learning provided in this embodiment of this application. For ease of understanding, the following describes in detail a process of obtaining the posterior distribution of the parameter of the first model through training in step 603.

In step 603, a process in which the first node obtains the posterior distribution of the parameter of the first model through training based on the prior distribution of the parameter of the first model and the training data is a process of locally training the model by using the training data. In a local training process, the prior distribution of the parameter of the model may be used in a plurality of manners. For example, the prior distribution of the parameter of the model may be used as a constraint condition in an optimization objective of local training. Alternatively, an initial value of the posterior distribution of the parameter of the model may be determined based on the prior distribution of the parameter of the model. A local training process corresponding to each of the two use manners is described below in detail.

Manner 1: The prior distribution of the parameter of the model is used as the constraint condition in the optimization objective of local training.

First, the optimization objective of local training may be set as follows: A loss function of the posterior distribution of the parameter of the model on the training data is as small as possible (or a likelihood function is as large as possible). A function for measuring a distribution difference between the prior distribution and the posterior distribution of the parameter of the model is as small as possible or a penalty for the distribution difference is as small as possible.

Then, before local training starts, an initial value may be first set for the posterior distribution of the parameter of the model. The initial value may be set in a plurality of manners. For example, the initial value of the posterior distribution of the parameter of the model may be set to a value of the posterior distribution of the parameter of the model before a current round of iteration (for example, a previous round of iteration), or may be a randomized initial value. In some embodiments, the initial value of the posterior distribution of the parameter of the model may be determined based on the prior distribution of the parameter of the model. For example, if the prior distribution of the parameter of the model uses a "point description" for the posterior distribution, the initial value of the posterior distribution of the parameter of the model may be a value of the prior distribution of the parameter of the model. For example, if the prior distribution of the parameter of the model uses a "distribution description" for the posterior distribution, the initial value of the posterior distribution of the parameter of the model may be a value sampled based on the prior distribution of the parameter of the model.

Next, after the initial value of the posterior distribution of the parameter of the model and the optimization objective are determined, local training may be performed by using a score function (score function) or through re-parameterization until the posterior distribution of the parameter of the model converges.

Manner 2: The initial value of the posterior distribution of the parameter of the model is determined based on the prior distribution of the parameter of the model.

If the prior distribution of the parameter of the model uses a "point description" for the posterior distribution, the prior distribution of the parameter of the model may be used as the initial value of the posterior distribution of the parameter of the model in the local training process. Alternatively, if the prior distribution of the parameter of the local model uses a "distribution description" for the posterior distribution, the initial value of the posterior distribution of the parameter of the model may be a value sampled based on the prior distribution of the parameter of the model in the local training process.

The optimization objective of local training may be set as follows: During training of the training data, a loss function for the posterior distribution of the parameter of the model is as small as possible or a likelihood function is as large as possible.

Next, after the initial value of the posterior distribution of the parameter of the model and the optimization objective of local training are determined, training may be performed by using a score function (score function) or through re-parameterization until the posterior distribution of the parameter of the model converges.

Optionally, in some embodiments, in a process of obtaining the posterior distribution of the parameter of the first model through training in the foregoing manner 1 or manner 2, a sparsification parameter may be further introduced. In this way, the parameters of the first model are sparsified (that is, a part of parameters of the first model are set to 0), to reduce a quantity of parameters of the first model.

For example, in step 603, the first node may obtain the posterior distribution of the target parameter of the first model through training based on the prior distribution of the parameter of the first model, the training data, and a selection probability of each parameter of the first model. The selection probability of each parameter indicates a probability of selecting each parameter as the target parameter of the first model, and the target parameter is a part of all parameters of the first model. In other words, the target parameters are a part of parameters selected from all parameters of the first model based on the selection probability of each parameter, and are parameters that need to be reserved in a training process of the first model. A parameter other than the target parameter is a parameter that needs to be removed from the first model in the training process.

In this way, in a process of training the first model, only the posterior distribution of the target parameter of the first model may be obtained through training, and posterior distribution of another parameter does not need to be calculated. This reduces a calculation amount in the training process.

After obtaining the posterior distribution of the target parameter of the first model through training, the first node sends the posterior distribution of the target parameter of the first model to the second node, to reduce a communication amount between the first node and the second node.

It is found through experiments that, in some cases, sparsification of parameters of the model can effectively reduce the parameters of the model without affecting original performance of the model, and even slightly improve performance of the model. Therefore, in this embodiment of this application, in a process in which the client node trains the model, a sparsification parameter is introduced to filter original parameters of the model, to remove a part of parameters of the model, so that a quantity of parameters of the model can be effectively reduced, a calculation amount in the training process is reduced, and a communication amount between nodes can be reduced. This effectively improves federated learning efficiency.

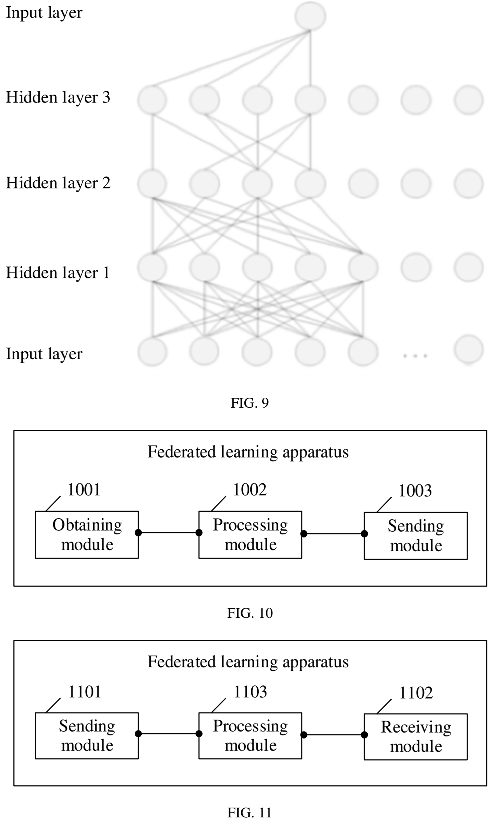

For example, FIG. 9 is a diagram of a structure of a model obtained through parameter sparsification according to an embodiment of this application. As shown in FIG. 9, in a model obtained after parameter sparsification, a part of parameters at each neural network layer in the model are removed, and only a part of parameters are retained, so that a quantity of parameters of the entire model is greatly reduced.

Optionally, the selection probability of each parameter of the first model is a probability value that is dynamically changeable in the training process. In other words, in a training process, the selection probability of each parameter of the first model may change with training, but is not a fixed value.

In this way, in the training process, the first node learns the selection probability of each parameter while learning posterior distribution of the parameter, so that the selection probability of each parameter can be automatically adjusted based on the training data, to better learn an optimal parameter sparsification result, and ensure performance of the model obtained through training.

For example, to implement sparsification of the parameters of the model, Bernoulli distribution may be introduced in a process of initializing the parameters of the model, so that the parameters of the model are sparsified. Bernoulli distribution is as follows.

Specifically, for each parameter of the model, the parameter may be represented by using the following formula 1.

$$\theta_{w,m}|\gamma_{w,m} \sim \gamma_{w,m}\mathcal{N}(\mu_{w,m}, \sigma^2_{w,m}) + (1 - \gamma_{w,m})\delta_0,$$
$$\gamma_{w,m} \sim \mathrm{Bern}(\lambda_{w,m}), \ m = 1, \ldots, T, \qquad \text{Formula 1}$$

$\theta_{w,m}|\gamma_{w,m}$ represents the parameter; $\gamma_{w,m}$ represents a Bernoulli variable, that is, a value of $\gamma_{w,m}$ is 1 or 0; $\sim$ represents obeying distribution (Gaussian distribution or Bernoulli distribution); $\mathcal{N}(\mu_{w,m}, \sigma^2_{w,m})$ represents Gaussian distribution with a mean value of $\mu_{w,m}$ and a variance of $\sigma^2_{w,m}$; $\mathrm{Bern}(\lambda_{w,m})$ represents Bernoulli distribution; and $\lambda_{w,m}$ represents a Bernoulli probability.

In a model training process, the optimization objective of the model may be specifically represented by using the following formula 2.

$$\Omega^i(v) \approx -\frac{n}{b}\frac{1}{a}\sum_{j=1}^{b}\sum_{k=1}^{a} \log p^i_{h(v,g_k)}(D^i_j) \qquad \text{Formula (2)}$$
$$+ \zeta\, \mathrm{KL}(q^i_v(\theta)\|w_v(\theta))$$

$\Omega^i(v)$ represents the optimization objective; b is a batch data volume; a is a Monte Carlo sample volume;

$$\log p^i_{h(\boldsymbol{v},\boldsymbol{g_k})}(D^i_j)$$ represents a likelihood function corresponding to the parameter of the model; $$D^i_j$$

represents a training dataset; KL () represents calculating KL divergence; and $$\zeta\,\mathrm{KL}\big(q^i_{\boldsymbol{v}}(\boldsymbol{\theta})\|w_{\boldsymbol{v}}(\boldsymbol{\theta})\big)$$

represents a distribution difference measurement function of the prior distribution and the posterior distribution of the parameter of the model.

The foregoing describes in detail the method provided in embodiments of this application. The following describes a device that is provided in embodiments of this application and that is configured to perform the foregoing method.

FIG. 10 is a diagram of a structure of a federated learning apparatus according to an embodiment of this application. As shown in FIG. 10, the federated learning apparatus belongs to a first node, and includes:

an obtaining module 1001, configured to obtain prior distribution of parameters of a plurality of models;
a processing module 1002, configured to determine, based on the prior distribution of the parameters of the plurality of models and training data of the apparatus, performance of each of the plurality of models in processing the training data, where
the processing module 1002 is further configured to perform training based on prior distribution of a parameter of a first model and the training data, to obtain posterior distribution of the parameter of the first model, where the first model is one of the plurality of models, and the first model is determined in the plurality of models based on the performance of each model in processing the training data; and
a sending module 1003, configured to send the posterior distribution of the parameter of the first model to a second node.

In a possible implementation, the obtaining apparatus is specifically configured to receive the prior distribution of the parameters of the plurality of models from the second node; and
the sending module 1003 is further configured to send, by the first node, indication information to the second node, where the indication information indicates that the posterior distribution that is of the parameter and that is sent by the first node corresponds to the first model.

In a possible implementation, the obtaining apparatus is specifically configured to separately receive prior distribution of parameters of different models from a plurality of nodes, to obtain the prior distribution of the parameters of the plurality of models, where the prior distribution of the parameter of the first model is received by the first node from the second node.

In a possible implementation, the processing module 1002 is specifically configured to:

obtain a parameter value of each of the plurality of models through sampling based on the prior distribution of the parameters of the plurality of models; and
determine, based on the parameter value of each model and the training data, the performance of each model in processing the training data.

In a possible implementation, the processing module 1002 is specifically configured to perform training based on the prior distribution of the parameter of the first model, the training data, and a selection probability of each parameter of the first model, to obtain posterior distribution of a target parameter of the first model, where the selection probability of each parameter indicates a probability of selecting each parameter as the target parameter of the first model, and the target parameter is a part of all parameters of the first model; and
the sending module 1003 is specifically configured to send the posterior distribution of the target parameter of the first model to the second node.

FIG. 11 is a diagram of a structure of a federated learning apparatus according to an embodiment of this application. As shown in FIG. 11, the federated learning apparatus belongs to a second node, and includes:

a sending module 1101, configured to send prior distribution of a parameter of a first model to a plurality of first nodes, where the first model is a machine learning model whose parameter obeys the distribution;
a receiving module 1102, configured to receive posterior distribution that is of the parameter of the first model and that is sent by a part of the plurality of first nodes; and
a processing module 1103, configured to update the prior distribution of the parameter of the first model based on the posterior distribution of the parameter of the first model, to obtain updated prior distribution of the parameter of the first model, where
the sending module 1101 is further configured to send the updated prior distribution of the parameter of the first model to the part of first nodes.

In a possible implementation, the sending module 1101 is further configured to send prior distribution of parameters of a plurality of models to the plurality of first nodes, where the prior distribution of the parameters of the plurality of models includes the prior distribution of the parameter of the first model; and
the receiving module 1102 is further configured to receive indication information sent by the part of first nodes, where the indication information indicates that the posterior distribution that is of the parameter and that is sent by the part of first nodes corresponds to the first model.

In a possible implementation, the second node is one of a plurality of aggregation nodes, each of the plurality of aggregation nodes is configured to send prior distribution of a parameter of a model to the plurality of first nodes, and different aggregation nodes send prior distribution of parameters of different models.

In a possible implementation, the receiving module 1102 is further configured to receive posterior distribution that is of a part of parameters of the first model and that is sent by the part of the plurality of first nodes; and
the processing module 1103 is further configured to update the prior distribution of the parameter of the first model based on the posterior distribution of the part of parameters of the first model.

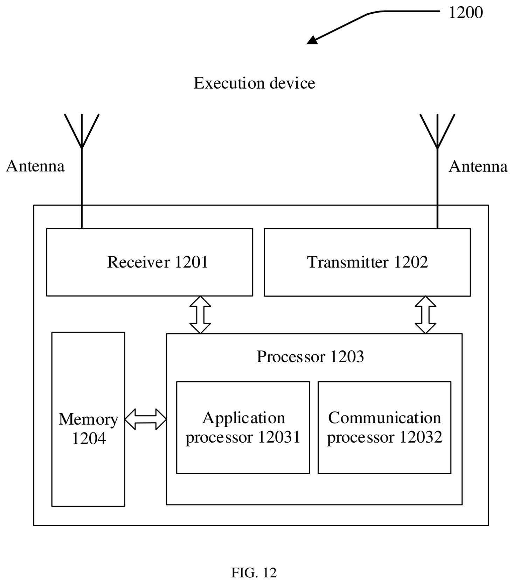

FIG. 12 is a diagram of a structure of an execution device according to an embodiment of this application. The execution device 1200 may be specifically represented as a mobile phone, a tablet computer, a laptop, an intelligent wearable device, a server, or the like. This is not limited herein. Specifically, the execution device 1200 includes a receiver 1201, a transmitter 1202, a processor 1203, and a memory 1204 (where there may be one or more processors 1203 in the execution device 1200, and one processor is used as an example in FIG. 12). The processor 1203 may include an application processor 12031 and a communication processor 12032. In some embodiments of this application, the receiver 1201, the transmitter 1202, the processor 1203, and the memory 1204 may be connected through a bus or in another manner.

The memory 1204 may include a read-only memory and a random access memory, and provide instructions and data to the processor 1203. A part of the memory 1204 may further include a non-volatile random access memory (non-volatile random access memory, NVRAM). The memory 1204 stores a processor and operation instructions, an executable module, or a data structure; or a subset thereof; or an extended set thereof. The operation instructions may include various operation instructions used to implement various operations.

The processor 1203 controls an operation of the execution device. In a specific application, the components of the execution device are coupled together through a bus system. In addition to a data bus, the bus system may further include a power bus, a control bus, a status signal bus, and the like. However, for clear description, various types of buses in the figure are marked as the bus system.

The method disclosed in embodiments of this application may be applied to the processor 1203, or may be implemented by the processor 1203. The processor 1203 may be an integrated circuit chip with a signal processing capability. During implementation, the steps of the foregoing method may be completed by using a hardware integrated logic circuit in the processor 1203 or instructions in the form of software. The processor 1203 may be a general-purpose processor, a digital signal processor (digital signal processing, DSP), a microprocessor, or a microcontroller. The processor 1203 may further include an application-specific integrated circuit (application-specific integrated circuit, ASIC), a field programmable gate array (field programmable gate array, FPGA) or another programmable logic device, a discrete gate or transistor logic device, or a discrete hardware component. The processor 1203 may implement or perform the method, the steps, and the logical block diagrams disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. A software module may be located in a mature storage medium in the art, such as a random access memory, a flash memory, a read-only memory, a programmable read-only memory, an electrically erasable programmable memory, or a register. The storage medium is located in the memory 1204, and the processor 1203 fetches information in the memory 1204, and completes the steps of the foregoing method in combination with its hardware.

The receiver 1201 may be configured to receive input digit or character information, and generate a signal input related to related setting and function control of the execution device. The transmitter 1202 may be configured to output digit or character information through a first interface. The transmitter 1202 may be further configured to send instructions to a disk group through the first interface, to modify data in the disk group. The transmitter 1202 may further include a display device such as a display.

The electronic device provided in embodiments of this application may be specifically a chip. The chip includes a processing unit and a communication unit. The processing unit may be, for example, a processor, and the communication unit may be, for example, an input/output interface, a pin, or a circuit. The processing unit may execute computer-executable instructions stored in a storage unit, so that the chip in the execution device performs the method described in the foregoing embodiments. Optionally, the storage unit is a storage unit in the chip, for example, a register or a buffer. Alternatively, the storage unit may be a storage unit in a wireless access device but outside the chip, for example, a read-only memory (read-only memory, ROM), another type of static storage device that can store static information and instructions, or a random access memory (random access memory, RAM).

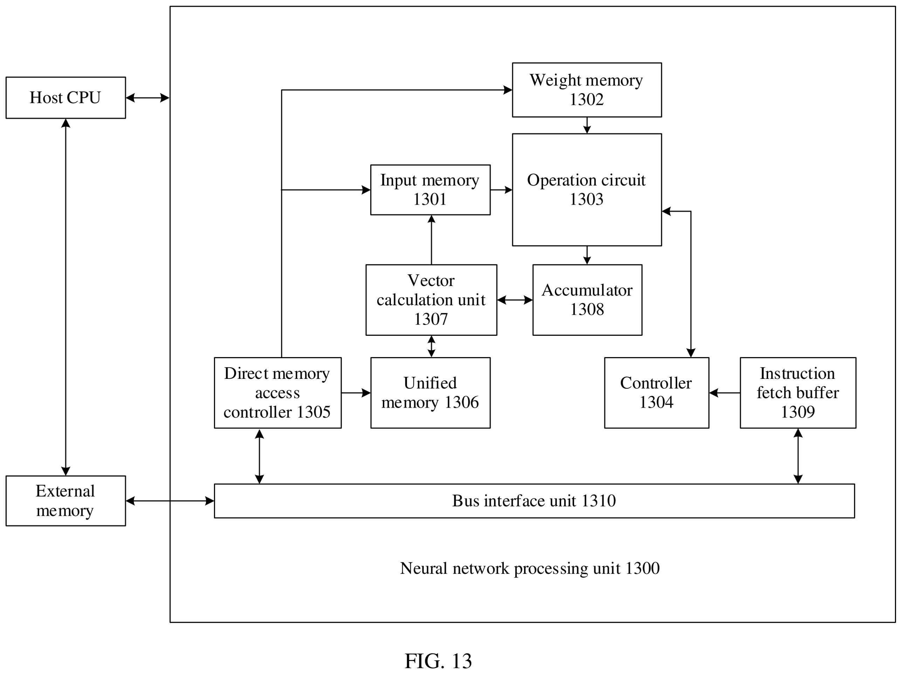

Specifically, FIG. 13 is a diagram of a structure of a chip according to an embodiment of this application. The chip may be represented as a neural network processing unit NPU 1300. The NPU 1300 is mounted to a host CPU (Host CPU) as a coprocessor, and the host CPU allocates a task. A core part of the NPU is an operation circuit 1303. A controller 1304 controls the operation circuit 1303 to extract matrix data in a memory and performs a multiplication operation.

In some implementations, the operation circuit 1303 includes a plurality of process engines (Process Engines, PEs). In some implementations, the operation circuit 1303 is a two-dimensional systolic array. The operation circuit 1303 may alternatively be a one-dimensional systolic array or another electronic circuit capable of performing mathematical operations such as multiplication and addition. In some implementations, the operation circuit 1303 is a general-purpose matrix processor.

For example, it is assumed that there is an input matrix A, a weight matrix B, and an output matrix C. The operation circuit fetches, from the weight memory 1302, data corresponding to the matrix B, and caches the data on each PE in the operation circuit. The operation circuit fetches data of the matrix A from an input memory 1301 to perform a matrix operation on the matrix B, and stores an obtained partial result or an obtained final result of the matrix in an accumulator (accumulator) 1308.

A unified memory 1306 is configured to store input data and output data. Weight data is directly transferred to the weight memory 1302 through a direct memory access controller (Direct Memory Access Controller, DMAC) 1305. The input data is also transferred to the unified memory 1306 through the DMAC.

BIU is the abbreviation of a bus interface unit. A bus interface unit 1310 is used for interaction between an AXI bus and the DMAC and interaction between the AXI bus and an instruction fetch buffer (Instruction Fetch Buffer, IFB) 1309.

The bus interface unit 1310 (Bus Interface Unit, BIU) is configured for the instruction fetch buffer 1309 to obtain instructions from an external memory, and is further configured for the direct memory access controller 1305 to obtain original data of the input matrix A or the weight matrix B from the external memory.

The DMAC is mainly configured to transfer input data in the external memory DDR to the unified memory 1306, transfer the weight data to the weight memory 1302, or transfer the input data to the input memory 1301.

A vector calculation unit 1307 includes a plurality of operation processing units; and if necessary, performs further processing such as vector multiplication, vector addition, an exponential operation, a logarithmic operation, or value comparison on an output of the operation circuit 1303. The vector calculation unit 1307 is mainly used for non-convolutional/fully-connected layer network computation in a neural network, such as batch normalization (batch normalization), pixel-level summation, and upsampling a feature map.

In some implementations, the vector calculation unit 1307 can store a processed output vector in the unified memory 1306. For example, the vector calculation unit 1307 may apply a linear function or a nonlinear function to the output of the operation circuit 1303, for example, perform linear interpolation on a feature map extracted at a convolutional layer. For another example, the linear function or the nonlinear function is applied to a vector of an accumulated value to generate an activation value. In some implementations, the vector calculation unit 1307 generates a normalized value, a value obtained through pixel-level summation, or both a normalized value and a value obtained through pixel-level summation. In some implementations, the processed output vector can be used as an activation input to the operation circuit 1303. For example, the processed output vector can be used at a subsequent layer in the neural network.

The instruction fetch buffer (instruction fetch buffer) 1309 connected to the controller 1304 is configured to store instructions used by the controller 1304.

The unified memory 1306, the input memory 1301, the weight memory 1302, and the instruction fetch buffer 1309 are all on-chip memories. The external memory is private to a hardware architecture of the NPU.

Any one of the processors mentioned above may be a general-purpose central processing unit, a microprocessor, an ASIC, or one or more integrated circuits for controlling program execution.

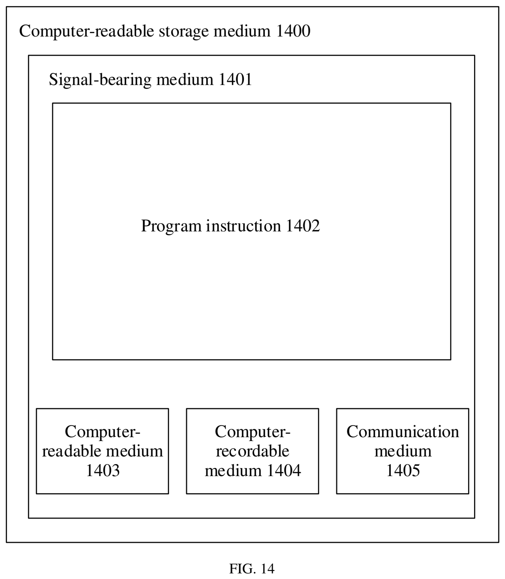

FIG. 14 is a diagram of a structure of a computer-readable storage medium according to an embodiment of this application. This application further provides a computer-readable storage medium. In some embodiments, the method disclosed in FIG. 6 may be implemented as computer program instructions encoded in a machine-readable format on the computer-readable storage medium or encoded in another non-transitory medium or product.

FIG. 14 schematically shows a conceptual partial view of an example computer-readable storage medium arranged according to at least some embodiments shown herein, and the example computer-readable storage medium includes a computer program for executing a computer process on a computing device.

In an embodiment, a computer-readable storage medium 1400 is provided by using a signal-bearing medium 1401. The signal-bearing medium 1401 may include one or more program instructions 1402, and when the one or more program instructions 1402 are run by one or more processors, the foregoing functions or some functions described in FIG. 6 may be provided.

In some examples, the signal-bearing medium 1401 may include a computer-readable medium 1403, for example, but not limited to, a hard disk drive, a compact disc (CD), a digital video disc (DVD), a digital tape, a memory, a ROM, or a RAM.

In some implementations, the signal-bearing medium 1401 may include a computer-recordable medium 1404, for example, but not limited to, a memory, a read/write (R/W) CD, or an R/W DVD. In some implementations, the signal-bearing medium 1401 may include a communication medium 1405, for example, but not limited to, a digital and/or analog communication medium (for example, an optical cable, a waveguide, a wired communication link, or a wireless communication link). Therefore, for example, the signal-bearing medium 1401 may be delivered through the communication medium 1405 (for example, a wireless communication medium complying with the IEEE 802.X standard or another transmission protocol) in a wireless form.

The one or more program instructions 1402 may be, for example, computer-executable instructions or logic implementation instructions. In some examples, the computing device may be configured to provide various operations, functions, or actions in response to the program instructions 1402 that are delivered to the computing device by using one or more of the computer-readable medium 1403, the computer-recordable medium 1404, and/or the communication medium 1405.

In addition, it should be noted that the apparatus embodiments described above are merely examples. The units described as separate parts may or may not be physically separate, and parts displayed as units may or may not be physical units, that is, may be located at one position, or may be distributed on a plurality of network units. Some or all the modules may be selected according to actual needs to achieve the objectives of the solutions of embodiments. In addition, in the accompanying drawings of the apparatus embodiments provided by this application, connection relationships between modules indicate that the modules have communication connections with each other, which may be specifically implemented as one or more communication buses or signal cables.

Based on the description of the foregoing implementations, a person skilled in the art may clearly understand that this application may be implemented by software in addition to necessary universal hardware, or by dedicated hardware, including a dedicated integrated circuit, a dedicated CPU, a dedicated memory, a dedicated component, and the like. Generally, any functions that can be performed by a computer program can be easily implemented by using corresponding hardware. Moreover, a specific hardware structure used to achieve a same function may be in various forms, for example, in a form of an analog circuit, a digital circuit, or a dedicated circuit. However, as for this application, software program implementation is a better implementation in most cases. Based on such an understanding, the technical solutions of this application essentially or the part contributing to the conventional technology may be implemented in a form of a software product. The computer software product is stored in a readable storage medium, such as a floppy disk, a USB flash drive, a removable hard disk, a ROM, a RAM, a magnetic disk, or an optical disc of a computer, and includes several instructions for instructing a computer device (which may be a personal computer, a training device, or a network device) to perform the methods described in embodiments of this application.

All or some of the foregoing embodiments may be implemented by using software, hardware, firmware, or any combination thereof. When software is used to implement the embodiments, all or a part of the embodiments may be implemented in a form of a computer program product.

The computer program product includes one or more computer instructions. When the computer program instructions are loaded and executed on a computer, all or some of the procedures or functions according to embodiments of this application are generated. The computer may be a general-purpose computer, a dedicated computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, a computer, a training device, or a data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium that can be stored by the computer, or a data storage device, such as a training device or a data center, integrating one or more usable media. The usable medium may be a magnetic medium (for example, a floppy disk, a hard disk drive, or a magnetic tape), an optical medium (for example, a DVD), a semiconductor medium (for example, a solid state disk (Solid State Disk, SSD)), or the like.

## Claims

1. A federated learning method, comprising:

   obtaining, by a first node, prior distribution of parameters of a plurality of models;
   determining, by the first node based on the prior distribution of the parameters of the plurality of models and training data of the first node, performance of each of the plurality of models in processing the training data;

performing, by the first node, training based on prior distribution of a parameter of a first model and the training data, to obtain posterior distribution of the parameter of the first model, wherein the first model is one of the plurality of models, and the first model is determined in the plurality of models based on the performance of each model in processing the training data; and

sending, by the first node, the posterior distribution of the parameter of the first model to a second node.

2. The method according to claim 1, wherein obtaining, by the first node, the prior distribution of the parameters of the plurality of models comprises:

receiving, by the first node, the prior distribution of the parameters of the plurality of models from the second node; and
the method further comprises:
sending, by the first node, indication information to the second node, wherein the indication information indicates that the posterior distribution that is of the parameter and that is sent by the first node corresponds to the first model.

3. The method according to claim 1, wherein obtaining, by the first node, the prior distribution of the parameters of the plurality of models comprises:
separately receiving, by the first node, prior distribution of parameters of different models from a plurality of nodes, to obtain the prior distribution of the parameters of the plurality of models, wherein the prior distribution of the parameter of the first model is received by the first node from the second node.

4. The method according to any one of claims 1 to 3, wherein determining, by the first node based on the prior distribution of the parameters of the plurality of models and the training data of the first node, the performance of each of the plurality of models in processing the training data comprises:

obtaining, by the first node, a parameter value of each of the plurality of models through sampling based on the prior distribution of the parameters of the plurality of models; and
determining, by the first node based on the parameter value of each model and the training data, the performance of each model in processing the training data.

5. The method according to any one of claims 1 to 4, wherein the performance of each model in processing the training data comprises one or more of the following: model accuracy, a model confidence level, a model convergence speed, and a gradient forward direction of the model during training.

6. The method according to any one of claims 1 to 5, wherein performing, by the first node, training based on the prior distribution of the parameter of the first model and the training data, to obtain the posterior distribution of the parameter of the first model comprises:

performing, by the first node, training based on the prior distribution of the parameter of the first model, the training data, and a selection probability of each parameter of the first model, to obtain posterior distribution of a target parameter of the first model, wherein the selection probability of each parameter indicates a probability of selecting each parameter as the target parameter of the first model, and the target parameter is a part of all parameters of the first model; and
sending, by the first node, the posterior distribution of the parameter of the first model to the second node comprises:
sending, by the first node, the posterior distribution of the target parameter of the first model to the second node.

7. The method according to claim 6, wherein the selection probability of each parameter of the first model is a probability value that is dynamically changeable in a training process.

8. The method according to any one of claims 1 to 7, wherein the prior distribution of the parameter of the first model is probability distribution of the parameter of the first model or probability distribution of the probability distribution of the parameter of the first model.

9. A federated learning method, comprising:

sending, by a second node, prior distribution of a parameter of a first model to a plurality of first nodes;

receiving, by the second node, posterior distribution that is of the parameter of the first model and that is sent by a part of the plurality of first nodes;

updating, by the second node, the prior distribution of the parameter of the first model based on the posterior distribution of the parameter of the first model, to obtain updated prior distribution of the parameter of the first model; and

sending, by the second node to the part of first nodes, the updated prior distribution of the parameter of the first model.

10. The method according to claim 9, wherein the method further comprises:

sending, by the second node, prior distribution of parameters of a plurality of models to the plurality of first nodes, wherein the prior distribution of the parameters of the plurality of models comprises the prior distribution of the parameter of the first model; and

receiving, by the second node, indication information sent by the part of first nodes, wherein the indication information indicates that the posterior distribution that is of the parameter and that is sent by the part of first nodes corresponds to the first model.

11. The method according to claim 10, wherein the method further comprises:

receiving, by the second node, posterior distribution that is of a parameter of a second model and that is sent by another part of first nodes in the plurality of first nodes, wherein the second model is one of the plurality of models; and

updating, by the second node, prior distribution of the parameter of the second model based on the posterior distribution of the parameter of the second model.

12. The method according to claim 9, wherein the second node is one of a plurality of aggregation nodes, each of the plurality of aggregation nodes is configured to send prior distribution of a parameter of a model to the plurality of first nodes, and different aggregation nodes send prior distribution of parameters of different models.

13. The method according to any one of claims 9 to 12, wherein receiving, by the second node, the posterior distribution that is of the parameter of the first model and that is sent by the part of the plurality of first nodes comprises:

receiving, by the second node, posterior distribution that is of a part of parameters of the first model and that is sent by the part of the plurality of first nodes; and

updating, by the second node, the prior distribution of the parameter of the first model based on the posterior distribution of the parameter of the first model comprises:

updating, by the second node, the prior distribution of the parameter of the first model based on the posterior distribution of the part of parameters of the first model.

14. The method according to any one of claims 9 to 13, wherein the prior distribution of the parameter of the first model is probability distribution of the parameter of the first model or probability distribution of the probability distribution of the parameter of the first model.

15. A federated learning apparatus, wherein the apparatus belongs to a first node and comprises:

an obtaining module, configured to obtain prior distribution of parameters of a plurality of models;

a processing module, configured to determine, based on the prior distribution of the parameters of the plurality of models and training data of the apparatus, performance of each of the plurality of models in processing the training data, wherein

the processing module is further configured to perform training based on prior distribution of a parameter of a first model and the training data, to obtain posterior distribution of the parameter of the first model, wherein the first model is one of the plurality of models, and the first model is determined in the plurality of models based on the performance of each model in processing the training data; and

a sending module, configured to send the posterior distribution of the parameter of the first model to a second node.

16. The apparatus according to claim 15, wherein

the obtaining apparatus is specifically configured to receive the prior distribution of the parameters of the plurality of models from the second node; and

the sending module is further configured to send, by the first node, indication information to the second node, wherein the indication information indicates that the posterior distribution that is of the parameter and that is sent by the first node corresponds to the first model.

17. The apparatus according to claim 15, wherein

the obtaining apparatus is specifically configured to separately receive prior distribution of parameters of different models from a plurality of nodes, to obtain the prior distribution of the parameters of the plurality of models, wherein the prior distribution of the parameter of the first model is received by the first node from the second node.

18. The apparatus according to any one of claims 15 to 17, wherein the processing module is specifically configured to:

obtain a parameter value of each of the plurality of models through sampling based on the prior distribution of the parameters of the plurality of models; and

determine, based on the parameter value of each model and the training data, the performance of each model in processing the training data.

19. The apparatus according to any one of claims 15 to 18, wherein

the processing module is specifically configured to perform training based on the prior distribution of the parameter of the first model, the training data, and a selection probability of each parameter of the first model, to obtain posterior distribution of a target parameter of the first model, wherein the selection probability of each parameter indicates a probability of selecting each parameter as the target parameter of the first model, and the target parameter is a part of all parameters of the first model; and

the sending module is specifically configured to send the posterior distribution of the target parameter of the first model to the second node.

20. A federated learning apparatus, wherein the apparatus belongs to a second node and comprises:

a sending module, configured to send prior distribution of a parameter of a first model to a plurality of first nodes;

a receiving module, configured to receive posterior distribution that is of the parameter of the first model and that is sent by a part of the plurality of first nodes; and

a processing module, configured to update the prior distribution of the parameter of the first model based on the posterior distribution of the parameter of the first model, to obtain updated prior distribution of the parameter of the first model, wherein

the sending module is further configured to send the updated prior distribution of the parameter of the first model to the part of first nodes.

21. The apparatus according to claim 20, wherein

the sending module is further configured to send prior distribution of parameters of a plurality of models to the plurality of first nodes, wherein the prior distribution of the parameters of the plurality of models comprises the prior distribution of the parameter of the first model; and

the receiving module is further configured to receive indication information sent by the part of first nodes, wherein the indication information indicates that the posterior distribution that is of the parameter and that is sent by the part of first nodes corresponds to the first model.

22. The apparatus according to claim 20, wherein the second node is one of a plurality of aggregation nodes, each of the plurality of aggregation nodes is configured to send prior distribution of a parameter of a model to the plurality of first nodes, and different aggregation nodes send prior distribution of parameters of different models.

23. The apparatus according to any one of claims 20 to 22, wherein

the receiving module is further configured to receive posterior distribution that is of a part of parameters of the first model and that is sent by the part of the plurality of first nodes; and

the processing module is further configured to update the prior distribution of the parameter of the first model based on the posterior distribution of the part of parameters of the first model.

24. A federated learning apparatus, comprising a memory and a processor, wherein the memory stores code, the processor is configured to execute the code, and when the code is executed, the apparatus performs the method according to any one of claims 1 to 14.

25. A computer storage medium, wherein the computer storage medium stores instructions, and when the instructions are executed by a computer, the computer is enabled to implement the method according to any one of claims 1 to 14.

26. A computer program product, wherein the computer program product stores instructions, and when the instructions are executed by a computer, the computer is enabled to implement the method according to any one of claims 1 to 14.

Central node

Client node 1    Client node 2    ...    Client node N

FIG. 1

A central node builds a federated model — 201

A plurality of client nodes obtain or receive the federated model from the central node — 202

The plurality of client nodes train the federated model based on local training data, to obtain local models — 203

The plurality of client nodes upload, to the central node, the local models obtained through training — 204

The central node aggregates the plurality of local models to obtain an updated federated model — 205

FIG. 2

Neural
network
layer 130

Output layer
140

Hidden layer n
13n

Hidden layer 2
132

Hidden layer 1
131

Convolutional
neural network
(CNN)
100

Convolutional
layer/Pooling
layer
120

126

125

124

123

122

121

Input
layer
110

Input layer
110

To-be-
processed
image

FIG. 3

FIG. 4

500

Aggregation node 501

Communication
network

Client node
502

Client node 503

Examples

FIG. 5

| A first node obtains prior distributions of parameters of a plurality of models | 601 |

↓

| The first node determines, based on the prior distribution of the parameters of the plurality of models and local training data of the first node, performance of each of the plurality of models in processing the local training data | 602 |

↓

| The first node performs training based on prior distribution of a parameter of a first model and the local training data, to obtain posterior distribution of the parameter of the first model, where the first model is one of the plurality of models, and the first model is determined in the plurality of models based on the performance of each model in processing the local training data | 603 |

↓

| The first node sends the posterior distribution of the parameter of the first model to a second node | 604 |

FIG. 6

| Aggregation node | Client node 1 | Client node 2 | Client node 3 | Client node 4 |
|---|---|---|---|---|

701: Prior distribution of parameters of a plurality of models

702: Posterior distribution of a parameter of a model 1

702: Posterior distribution of a parameter of a model 1

702: Posterior distribution of a parameter of a model 2

702: Posterior distribution of a parameter of a model 2

703: Update prior distribution of the parameter of the model 1 and prior distribution of the parameter of the model 2

704: Prior distribution of the parameter of the model 1

704: Prior distribution of the parameter of the model 1

705: Prior distribution of the parameter of the model 2

705: Prior distribution of the parameter of the model 2

FIG. 7A

FIG. 7B

EP 4 654 088 A1

| Aggregation node 1 | Aggregation node 2 | Client node 1 and client node 2 | Client node 3 and client node 4 |
|---|---|---|---|

801: Prior distribution of a parameter of a model 1

802: Prior distribution of a parameter of a model 1

803: Posterior distribution of the parameter of the model 1

804: Posterior distribution of the parameter of the model 2

805: Update the prior distribution of the parameter of the model 1

806: Update the prior distribution of the parameter of the model 2

807: Prior distribution of the parameter of the model 1

808: Prior distribution of the parameter of the model 2

FIG. 8A

FIG. 8B

Input layer

Hidden layer 3

Hidden layer 2

Hidden layer 1

Input layer

FIG. 9

Federated learning apparatus

1001
Obtaining module

1002
Processing module

1003
Sending module

FIG. 10

Federated learning apparatus

1101
Sending module

1103
Processing module

1102
Receiving module

FIG. 11

1200

Execution device

Antenna                          Antenna

| Receiver 1201 | Transmitter 1202 |

Processor 1203

| Memory 1204 | Application processor 12031 | Communication processor 12032 |

FIG. 12

EP 4 654 088 A1

FIG. 13

Computer-readable storage medium 1400

Signal-bearing medium 1401

Program instruction 1402

| Computer-readable medium 1403 | Computer-recordable medium 1404 | Communication medium 1405 |

FIG. 14

## INTERNATIONAL SEARCH REPORT

| International application No. |
|---|
| **PCT/CN2024/074834** |

**A. CLASSIFICATION OF SUBJECT MATTER**

G06N 3/098(2023.01)i; G06N 20/00(2019.01)i

According to International Patent Classification (IPC) or to both national classification and IPC

**B. FIELDS SEARCHED**

Minimum documentation searched (classification system followed by classification symbols)

IPC: G06N

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 联邦学习, 联合学习, 训练, 参数, 分布, 先验, 后验, 更新, federal, learning, training, parameter, distribution, prior, posterior

**C. DOCUMENTS CONSIDERED TO BE RELEVANT**

| Category* | Citation of document, with indication, where appropriate, of the relevant passages | Relevant to claim No. |
|---|---|---|
| PX | CN 116187430 A (HUAWEI TECHNOLOGIES CO., LTD.) 30 May 2023 (2023-05-30) claims 1-26 | 1-26 |
| X | CN 111898764 A (HUAWEI TECHNOLOGIES CO., LTD.) 06 November 2020 (2020-11-06) description, paragraphs [0073]-[0355] | 1-26 |
| A | CN 110490335 A (SHENZHEN QIANHAI WEBANK CO., LTD.) 22 November 2019 (2019-11-22) entire document | 1-26 |
| A | CN 112862011 A (INDUSTRIAL AND COMMERCIAL BANK OF CHINA LIMITED) 28 May 2021 (2021-05-28) entire document | 1-26 |
| A | CN 114819190 A (PING AN TECHNOLOGY (SHENZHEN) CO., LTD.) 29 July 2022 (2022-07-29) entire document | 1-26 |
| A | WO 2021120676 A1 (PING AN TECHNOLOGY (SHENZHEN) CO., LTD.) 24 June 2021 (2021-06-24) entire document | 1-26 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **02 April 2024** | **09 April 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/074834**

| Patent document cited in search report | | | Publication date (day/month/year) | Patent family member(s) | | | Publication date (day/month/year) |
|---|---|---|---|---|---|---|---|
| CN | 116187430 | A | 30 May 2023 | None | | | |
| CN | 111898764 | A | 06 November 2020 | None | | | |
| CN | 110490335 | A | 22 November 2019 | None | | | |
| CN | 112862011 | A | 28 May 2021 | None | | | |
| CN | 114819190 | A | 29 July 2022 | None | | | |
| WO | 2021120676 | A1 | 24 June 2021 | CN | 111814985 | A | 23 October 2020 |

Form PCT/ISA/210 (patent family annex) (July 2022)

**REFERENCES CITED IN THE DESCRIPTION**

**Patent documents cited in the description**

- CN 202310129559